(19) Europäisches Patentamt
European Patent Office
Office européen des brevets

(11) **EP 4 727 208 A1**

(12) **EUROPEAN PATENT APPLICATION**
published in accordance with Art. 153(4) EPC

(43) Date of publication:
**15.04.2026 Bulletin 2026/16**

(21) Application number: **23947897.7**

(22) Date of filing: **07.08.2023**

(51) International Patent Classification (IPC):
**H04W 28/02** (2009.01)

(52) Cooperative Patent Classification (CPC):
**H04W 28/02**

(86) International application number:
**PCT/CN2023/111453**

(87) International publication number:
**WO 2025/030315 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **XIAO, Yao**
**Shenzhen, Guangdong 518129 (CN)**

• **MA, Mengyao**
**Shenzhen, Guangdong 518129 (CN)**
• **XIE, Junwen**
**Shenzhen, Guangdong 518129 (CN)**
• **LI, Jiahui**
**Shenzhen, Guangdong 518129 (CN)**
• **DU, Yinggang**
**Shenzhen, Guangdong 518129 (CN)**

(74) Representative: **Maiwald GmbH**
**Engineering**
**Elisenhof**
**Elisenstrasse 3**
**80335 München (DE)**

(54) **DATA PROCESSING METHOD, AND COMMUNICATION APPARATUS**

(57) Embodiments of this application provide a data processing method and a communication apparatus, to reduce air interface overheads during data transmission. The method includes: When devices at a transmit end and a receive end both predict an actual sampled data set at a current moment based on a same algorithm by using a reconstructed data set of a first moving object at a previous moment, a sending device may obtain partial sampled data in the actual sampled data set at the current moment through prediction by using the reconstructed data set of the first moving object at the previous moment, and indicate, to a receiving device by using first information, location information of the partial sampled data obtained through prediction. In this way, there is no need to send all sampled data at the current moment, so that a transmission amount of sampled data can be reduced, to reduce air interface overheads.

FIG. 3

**Description**

**TECHNICAL FIELD**

Embodiments of this application relate to the communication field, and in particular, to a data processing method and a communication apparatus.

**BACKGROUND**

In a communication sensing scenario, data is collected for a target object. The collected data is usually discrete point data, which is also referred to as point cloud data. A discrete point may be a two-dimensional or three-dimensional discrete point. Based on processing on the collected discrete point data, imaging, environment reconstruction, target detection, and the like can be implemented.

To complete a sensing task, a sensing device (also referred to as a sending device) sends the collected point cloud data of the target object to a processing device (also referred to as a receiving device), so that the processing device obtains the point cloud data of the target object for data processing. An amount of the point cloud data exchanged between the sensing device and the processing device is usually large, and occupies a large quantity of air interface resources. Therefore, the point cloud data needs to be compressed. With in-depth research on application scenarios related to communication sensing, how to effectively reduce air interface overheads of data transmission is one of current research focuses.

**SUMMARY**

Embodiments of this application provide a data processing method and a communication apparatus, to reduce air interface transmission overheads of data (for example, point cloud data).

To achieve the foregoing objective, the following technical solutions are used in embodiments of this application.

According to a first aspect, a data processing method is provided. The method includes: determining first information, and sending the first information. The first information includes location information of predicted data in a first predicted data subset of a first predicted data set of a first moving object at a moment j, the first predicted data subset includes predicted data that matches each piece of sampled data in a first sampled data subset of an actual sampled data set of the first moving object at the moment j, the location information is used to determine a reconstructed data set of the first moving object at the moment j, the reconstructed data set of the first moving object at the moment j is used to determine a first predicted data set of the first moving object at a moment j+1, and j is a positive integer greater than 2.

Based on the data processing method, when devices at a transmit end and a receive end both can predict an actual sampled data set at a current moment based on a same algorithm by using a reconstructed data set of the first moving object at a previous moment, after obtaining partial sampled data (for example, the first predicted data subset) in the actual sampled data set at the current moment by using the reconstructed data set of the moving object at the previous moment, a sending device (for example, a terminal device) notifies, by using first information, a receiving device (for example, a network device) of location information of predicted data that is in the first predicted data set at the moment j and that matches the sampled data. In this way, the sending device does not need to send all sampled data at the current moment, so that a data transmission amount of actual sampled data can be reduced, to reduce air interface overheads. The method may be performed by a terminal device; may be performed by a part of the terminal device, for example, a processor, a chip, or a chip system of the terminal device; or may be implemented by a logical module or software that implements all or some functions related to the terminal device. Alternatively, the method may be performed by a network device, where the network device may be the network device; may be performed by a part of the network device, for example, a processor, a chip, or a chip system of the network device; or may be implemented by a logical module or software that implements all or some functions related to the network device. An example in which the method is performed by a terminal device is used below for description.

In a possible design scheme, that the first predicted data subset includes the predicted data that matches each piece of sampled data in the first sampled data subset may include that the first predicted data subset includes predicted data whose distance from each piece of sampled data in the first sampled data subset is less than a first threshold.

In a possible design scheme, the method provided in this embodiment of this application may further include: sending second information. The second information includes compressed data of a difference of each piece of sampled data in a second sampled data subset of the actual sampled data set, and the difference is a distance between the sampled data in the second sampled data subset and corresponding predicted data in a second predicted data subset, the second predicted data subset includes predicted data that is in the first predicted data set of the first moving object at the moment j and whose distance from each piece of sampled data in the second sampled data subset is greater than or equal to the first threshold and less than a second threshold. Based on this design scheme, sampled data that is in the actual sampled data set at the moment j, that cannot be represented by predicted data, and whose error with the predicted data is between the first threshold and the second threshold may be sent in a form of a difference, to reduce a data transmission amount of an air interface.

In a possible design scheme, the location information may include a location index of at least one of the following predicted data: the predicted data in the first predicted data subset, or predicted data, in the first predicted data set of the first moving object at the moment j, other than the predicted data in the first predicted data subset.

In a possible design scheme, the location information may include location indexes of at least two of the following predicted data: the predicted data in the first predicted data subset, the predicted data in the second predicted data subset, or predicted data, in the first predicted data set of the first moving object at the moment j, other than the predicted data in the first predicted data subset and the predicted data in the second predicted data subset.

In a possible design scheme, the method provided in this embodiment of this application may further include: sending third information. The third information includes compressed data of each piece of sampled data in a third sampled data subset, and the third sampled data subset includes sampled data, in the actual sampled data set, other than the sampled data in the first sampled data subset and the sampled data in the second sampled data subset, or the third sampled data subset includes sampled data, in the actual sampled data set, other than the sampled data in the first sampled data subset.

In a possible design scheme, a distance between the sampled data in the third sampled data subset and corresponding predicted data in the first predicted data set of the first moving object at the moment j is greater than or equal to the second threshold.

In a possible design scheme, the method provided in this embodiment of this application may further include: sending fourth information. The fourth information indicates that the first predicted data set of the first moving object at the moment j is determined based on a prediction model at a moment j-1 or is determined based on a prediction model at the moment j, and the prediction model at the moment j is obtained by updating the prediction model at the moment j-1. Based on this design scheme, the devices at the transmit end and the receive end may deploy a prediction model to obtain, through prediction, actual sampled data (for example, the first predicted data set) at the current moment based on the reconstructed data set of the first moving object at the previous moment. In this embodiment of this application, the prediction model may be an ordinary differential equation (ordinary differential equation, ODE) model.

In a possible design scheme, when the first predicted data set of the first moving object at the moment j is determined based on the prediction model at the moment j, the method provided in this embodiment of this application may further include: sending a first coefficient correction value at the moment j. The first coefficient correction value at the moment j is used to determine the prediction model at the moment j, the first coefficient correction value at the moment j is determined based on a reconstructed data set of the first moving object at the moment j-1, the actual sampled data set, and a second predicted data set of the first moving object at the moment j, and the second predicted data set of the first moving object at the moment j is determined based on the reconstructed data set of the first moving object at the moment j-1 and the prediction model at the moment j-1. Based on this design scheme, when predicting the actual sampled data set at the current moment, the sending device first updates a prediction model at the previous moment by using the actual sampled data set at the current moment, and then predicts the first predicted data set by using a prediction model that is at the current moment and that is obtained through update. In this way, the first predicted data set is more accurate, and is applicable to a scenario in which a motion prediction error is large. Therefore, the receiving device (for example, the network device) needs to predict the actual sampled data set at the current moment by using the prediction model at the current moment. Therefore, the sending device (for example, the terminal device) needs to send the first coefficient correction value at the moment j to the network device, so that the receiving device can update the prediction model at the moment j-1.

In a possible design scheme, when the first predicted data set of the first moving object at the moment j is determined based on the prediction model at the moment j-1, the prediction model at the moment j is obtained by updating the prediction model at the moment j-1 based on a second coefficient correction value at the moment j, where the second coefficient correction value at the moment j is determined based on the reconstructed data set of the first moving object at the moment j-1, the reconstructed data set of the first moving object at the moment j, and the first predicted data set of the first moving object at the moment j. Based on this design scheme, after a predicted data set at the current moment is obtained through prediction by using the prediction model at the previous moment, the prediction model at the previous moment is updated, to predict an actual sampled data set at a next moment by using the updated prediction model. This design scheme is applicable to a scenario in which a motion prediction error is small. In a possible design scheme, if a difference between the prediction model at the moment j and the prediction model at the moment j-1 meets a first condition, the first predicted data set of the first moving object at the moment j is a predicted data set output by the prediction model at the moment j-1; and if the difference does not meet the first condition, the first predicted data set of the first moving object at the moment j is a predicted data set output by the prediction model at the moment j. Based on this design scheme, the sending device may determine the prediction model by determining a change between a coefficient matrix of the prediction model at the current moment and a coefficient matrix of the prediction model at the previous moment, and/or a deviation between a prediction result output based on the prediction model at the current moment and a prediction result output based on the prediction model at the previous moment.

In a possible design scheme, that the difference meets the first condition may include at least one of the following: A prediction error between the prediction model at the moment j and the prediction model at the moment j-1 is less than a prediction error threshold, or a matrix structure difference between the prediction model at the moment j and the prediction model at the moment j-1 is less than a structure difference threshold.

In a possible design scheme, that the prediction error is less than the prediction error threshold may include at least one of the following: A difference between a central point of the predicted data set output by the prediction model at the moment j and a central point of the predicted data set output by the prediction model at the moment j-1 is less than a central point difference threshold, or a norm of a difference between a convex hull of the predicted data set output by the prediction model at the moment j and a convex hull of the predicted data set output by the prediction model at the moment j-1 is less than a norm threshold.

In a possible design scheme, that the matrix structure difference is less than the structure difference threshold may include at least one of the following: An absolute value of each element in a covariance matrix of a coefficient matrix of the prediction model at the moment j and a coefficient matrix of the prediction model at the moment j-1 is less than a first absolute value threshold, an absolute value of each element in a correlation coefficient matrix of the coefficient matrix of the prediction model at the moment j and the coefficient matrix of the prediction model at the moment j-1 is greater than a second absolute value threshold, or a sum of diagonal elements in a cross-correlation matrix of the coefficient matrix of the prediction model at the moment j and the coefficient matrix of the prediction model at the moment j-1 is less than a sum threshold.

In a possible design scheme, before sending the first information, the method provided in this embodiment of this application may further include: receiving configuration information, where the configuration information includes at least one of the following: a quantization manner, a compression manner, a sampling step, or a correspondence between a compression rate and a first threshold. Based on this design scheme, configuration information for completing data compression by the sending device (for example, the terminal device) may be flexibly indicated by the receiving device (for example, the network device), to be flexibly applicable to various application scenarios.

According to a second aspect, a data processing method is provided. The method includes: receiving first information, where the first information includes location information of predicted data in a first predicted data subset of a first predicted data set of a first moving object at a moment j, the first predicted data subset includes predicted data that matches each piece of sampled data in a first sampled data subset of an actual sampled data set of the first moving object at the moment j, and j is a positive integer greater than 2; determining the first predicted data subset based on the location information and the first predicted data set of the first moving object at the moment j; and determining a reconstructed data set of the first moving object at the moment j based on the first predicted data subset, where the reconstructed data set of the first moving object at the moment j is used to determine a first predicted data set of the first moving object at a moment j+1.

Based on the data processing method, when devices at a receive end and a transmit end both can predict an actual sampled data set at a current moment by using a reconstructed data set of a moving object at a previous moment, after obtaining the actual sampled data set at the current moment (that is, the first predicted data set of the first moving object at the moment j) through prediction by using the reconstructed data set of the moving object at the previous moment, a receiving device (for example, a network device) may determine, based on location information in received first information, predicted data that is in the first predicted data set of the first moving object at the moment j and that matches the actual sampled data set, to complete data reconstruction of the moving object at the current moment. The method may be performed by a terminal device; may be performed by a part of the terminal device, for example, a processor, a chip, or a chip system of the terminal device; or may be implemented by a logical module or software that implements all or some functions related to the terminal device. Alternatively, the method may be performed by a network device, where the network device may be the network device; may be performed by a part of the network device, for example, a processor, a chip, or a chip system of the network device; or may be implemented by a logical module or software that implements all or some functions related to the network device. An example in which the method is performed by a network device is used below for description.

In a possible design scheme, that the first predicted data subset includes the predicted data that matches each piece of sampled data in the first sampled data subset may include that the first predicted data subset includes predicted data whose distance from each piece of sampled data in the first sampled data subset is less than a first threshold.

In a possible design scheme, the method provided in this embodiment of this application may further include: receiving second information. The second information includes compressed data of a difference of each piece of sampled data in a second sampled data subset of the actual sampled data set of the first moving object at the moment j, and the difference is a distance between the sampled data in the second sampled data subset and corresponding predicted data in a second predicted data subset, the second predicted data subset includes predicted data that is in the first predicted data set of the first moving object at the moment j and whose distance from each piece of sampled data in the second sampled data subset is greater than or equal to the first threshold and less than a second threshold.

In a possible design scheme, the location information may include a location index of at least one of the following predicted data: the predicted data in the first predicted data subset, or predicted data, in the first predicted data set of the first moving object at the moment j, other than the predicted data in the first predicted data subset.

In a possible design scheme, the location information may include location indexes of at least two of the following predicted data: the predicted data in the first predicted data subset, the predicted data in the second predicted data subset, or predicted data, in the first predicted data set of the first moving object at the moment j, other than the predicted data in the first predicted data subset and the predicted data in the second predicted data subset.

In a possible design scheme, the method provided in this embodiment of this application may further include: receiving third information. The third information includes compressed data of each piece of sampled data in a third sampled data subset, and the third sampled data subset includes sampled data, in the actual sampled data set, other than the sampled data in the first sampled data subset and the sampled data in the second sampled data subset, or the third sampled data subset includes sampled data, in the actual sampled data set, other than the sampled data in the first sampled data subset.

In a possible design scheme, a distance between the sampled data in the third sampled data subset and corresponding predicted data in the first predicted data set of the first moving object at the moment j is greater than or equal to the second threshold.

In a possible design scheme, the method provided in this embodiment of this application may further include: receiving fourth information. The fourth information indicates that the first predicted data set of the first moving object at the moment j is determined based on a prediction model at a moment j-1 or is determined based on a prediction model at the moment j, and the prediction model at the moment j is obtained by updating the prediction model at the moment j-1.

In a possible design scheme, when the first predicted data set of the first moving object at the moment j is determined based on the prediction model at the moment j, the method provided in this embodiment of this application may further include: receiving a first coefficient correction value at the moment j. The first coefficient correction value at the moment j is used to determine the prediction model at the moment j, the first coefficient correction value at the moment j is determined based on a reconstructed data set of the first moving object at the moment j-1, the actual sampled data set, and a second predicted data set of the first moving object at the moment j, and the second predicted data set of the first moving object at the moment j is determined based on the reconstructed data set of the first moving object at the moment j-1 and the prediction model at the moment j-1.

In a possible design scheme, when the first predicted data set of the first moving object at the moment j is determined based on the prediction model at the moment j-1, the prediction model at the moment j is obtained by updating the prediction model at the moment j-1 based on a second coefficient correction value at the moment j, where the second coefficient correction value at the moment j is determined based on the reconstructed data set of the first moving object at the moment j-1, the reconstructed data set of the first moving object at the moment j, and the first predicted data set of the first moving object at the moment j.

In a possible design scheme, the method provided in this embodiment of this application may further include: sending configuration information, where the configuration information includes at least one of the following: a quantization manner, a compression manner, a sampling step, or a correspondence between a compression rate and a first threshold.

For technical effect of the method according to the second aspect, refer to the described technical effect of the method according to the first aspect. Details are not described herein again.

According to a third aspect, a communication apparatus is provided, to implement the foregoing methods. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions. The communication apparatus may be a terminal device, an apparatus including the terminal device, or an apparatus, for example, a chip, included in the terminal device.

In some possible designs, the communication apparatus includes a processing module and a transceiver module. The processing module is configured to determine first information. The first information includes location information of predicted data in a first predicted data subset of a first predicted data set of a first moving object at a moment j, the first predicted data subset includes predicted data that matches each piece of sampled data in a first sampled data subset of an actual sampled data set of the first moving object at the moment j, the location information is used to determine a reconstructed data set of the first moving object at the moment j, the reconstructed data set of the first moving object at the moment j is used to determine a first predicted data set of the first moving object at a moment j+1, and j is a positive integer greater than 2. The transceiver module is configured to send the first information.

In a possible design scheme, that the first predicted data subset includes the predicted data that matches each piece of sampled data in the first sampled data subset may include that the first predicted data subset includes predicted data whose distance from each piece of sampled data in the first sampled data subset is less than a first threshold.

In a possible design scheme, the transceiver module is further configured to send second information. The second information includes compressed data of a difference of each piece of sampled data in a second sampled data subset of the actual sampled data set of the first moving object at the moment j, and the difference is a distance between the sampled data in the second sampled data subset and corresponding predicted data in a second predicted data subset, the second predicted data subset includes predicted data that is in the first predicted data set of the first moving object at the moment j and whose distance from each piece of sampled data in the second sampled data subset is greater than or equal to the first threshold and less than a second threshold.

In a possible design scheme, the location information may include a location index of at least one of the following predicted data: the predicted data in the first predicted data subset, or predicted data, in the first predicted data set of the first moving object at the moment j, other than the predicted data in the first predicted data subset.

In a possible design scheme, the location information may include location indexes of at least two of the following predicted data: the predicted data in the first predicted data subset, the predicted data in the second predicted data subset, or predicted data, in the first predicted data set of the first moving object at the moment j, other than the predicted data in the first predicted data subset and the predicted data in the second predicted data subset.

In a possible design scheme, the transceiver module is further configured to send third information. The third information includes compressed data of each piece of sampled data in a third sampled data subset, and the third sampled data subset includes sampled data, in the actual sampled data set, other than the sampled data in the first sampled data subset and the sampled data in the second sampled data subset, or the third sampled data subset includes sampled data, in the actual sampled data set, other than the sampled data in the first sampled data subset.

In a possible design scheme, a distance between the sampled data in the third sampled data subset and corresponding predicted data in the first predicted data set of the first moving object at the moment j is greater than or equal to the second threshold.

In a possible design scheme, the transceiver module is further configured to send fourth information. The fourth information indicates that the first predicted data set of the first moving object at the moment j is determined based on a prediction model at a moment j-1 or is determined based on a prediction model at the moment j, and the prediction model at the moment j is obtained by updating the prediction model at the moment j-1.

In a possible design scheme, when the first predicted data set of the first moving object at the moment j is determined based on the prediction model at the moment j, the transceiver module is further configured to send a first coefficient correction value at the moment j. The first coefficient correction value at the moment j is used to determine the prediction model at the moment j, the first coefficient correction value at the moment j is determined based on a reconstructed data set of the first moving object at the moment j-1, the actual sampled data set, and a second predicted data set of the first moving object at the moment j, and the second predicted data set of the first moving object at the moment j is determined based on the reconstructed data set of the first moving object at the moment j-1 and the prediction model at the moment j-1.

In a possible design scheme, when the first predicted data set of the first moving object at the moment j is determined based on the prediction model at the moment j-1, the prediction model at the moment j is obtained by updating the prediction model at the moment j-1 based on a second coefficient correction value at the moment j, where the second coefficient correction value at the moment j is determined based on the reconstructed data set of the first moving object at the moment j-1, the reconstructed data set of the first moving object at the moment j, and the first predicted data set of the first moving object at the moment j.

In a possible design scheme, if a difference between the prediction model at the moment j and the prediction model at the moment j-1 meets a first condition, the first predicted data set of the first moving object at the moment j is a predicted data set output by the prediction model at the moment j-1; and if the difference does not meet the first condition, the first predicted data set of the first moving object at the moment j is a predicted data set output by the prediction model at the moment j.

In a possible design scheme, that the difference meets the first condition may include at least one of the following: A prediction error between the prediction model at the moment j and the prediction model at the moment j-1 is less than a prediction error threshold, or a matrix structure difference between the prediction model at the moment j and the prediction model at the moment j-1 is less than a structure difference threshold.

In a possible design scheme, that the prediction error is less than the prediction error threshold may include at least one of the following: A difference between a central point of the predicted data set output by the prediction model at the moment j and a central point of the predicted data set output by the prediction model at the moment j-1 is less than a central point difference threshold, or a norm of a difference between a convex hull of the predicted data set output by the prediction model at the moment j and a convex hull of the predicted data set output by the prediction model at the moment j-1 is less than a norm threshold.

In a possible design scheme, that the matrix structure difference is less than the structure difference threshold may include at least one of the following: An absolute value of each element in a covariance matrix of a coefficient matrix of the prediction model at the moment j and a coefficient matrix of the prediction model at the moment j-1 is less than a first absolute value threshold, an absolute value of each element in a correlation coefficient matrix of the coefficient matrix of the prediction model at the moment j and the coefficient matrix of the prediction model at the moment j-1 is greater than a second absolute value threshold, or a sum of diagonal elements in a cross-correlation matrix of the coefficient matrix of the prediction model at the moment j and the coefficient matrix of the prediction model at the moment j-1 is less than a sum threshold.

In a possible design scheme, the transceiver module is further configured to receive configuration information, where the configuration information includes at least one of the following: a quantization manner, a compression manner, a sampling step, or a correspondence between a compression rate and a first threshold.

In a possible design scheme, the transceiver module may include a receiving module and a sending module. The sending module is configured to implement a sending function of the communication apparatus according to the third aspect, and the receiving module is configured to implement a receiving function of the communication apparatus according to the third aspect.

In a possible design scheme, the communication apparatus according to the third aspect may further include a storage module, and the storage module stores a program or instructions. When the processing module executes the program or instructions, the communication apparatus according to the third aspect may be enabled to perform the method according to the first aspect.

For technical effect of the communication apparatus according to the third aspect, refer to the technical effect of the method according to the first aspect. Details are not described herein again.

According to a fourth aspect, a communication apparatus is provided, to implement the foregoing methods. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions. The communication apparatus may be a network device, an apparatus including the network device, or an apparatus, for example, a chip, included in the network device.

In some possible designs, the communication apparatus includes a transceiver module, configured to receive first information, where the first information includes location information of predicted data in a first predicted data subset of a first predicted data set of a first moving object at a moment j, the first predicted data subset includes predicted data that matches each piece of sampled data in a first sampled data subset of an actual sampled data set of the first moving object at the moment j, and j is a positive integer greater than 2; and a processing module, configured to determine the first predicted data subset based on the location information and the first predicted data set of the first moving object at the moment j. The processing module is further configured to determine a reconstructed data set of the first moving object at the moment j based on the first predicted data subset, where the reconstructed data set of the first moving object at the moment j is used to determine a first predicted data set of the first moving object at a moment j+1.

In a possible design scheme, that the first predicted data subset includes the predicted data that matches each piece of sampled data in the first sampled data subset may include that the first predicted data subset includes predicted data whose distance from each piece of sampled data in the first sampled data subset is less than a first threshold.

In a possible design scheme, the transceiver module is further configured to receive second information. The second information includes compressed data of a difference of each piece of sampled data in a second sampled data subset of the actual sampled data set of the first moving object at the moment j, and the difference is a distance between the sampled data in the second sampled data subset and corresponding predicted data in a second predicted data subset, the second predicted data subset includes predicted data that is in the first predicted data set of the first moving object at the moment j and whose distance from each piece of sampled data in the second sampled data subset is greater than or equal to the first threshold and less than a second threshold.

In a possible design scheme, the location information may include a location index of at least one of the following predicted data: the predicted data in the first predicted data subset, or predicted data, in the first predicted data set of the first moving object at the moment j, other than the predicted data in the first predicted data subset.

In a possible design scheme, the location information may include location indexes of at least two of the following predicted data: the predicted data in the first predicted data subset, the predicted data in the second predicted data subset, or predicted data, in the first predicted data set of the first moving object at the moment j, other than the predicted data in the first predicted data subset and the predicted data in the second predicted data subset.

In a possible design scheme, the transceiver module is further configured to receive third information. The third information includes compressed data of each piece of sampled data in a third sampled data subset, and the third sampled data subset includes sampled data, in the actual sampled data set, other than the sampled data in the first sampled data subset and the sampled data in the second sampled data subset, or the third sampled data subset includes sampled data, in the actual sampled data set, other than the sampled data in the first sampled data subset.

In a possible design scheme, a distance between the sampled data in the third sampled data subset and corresponding predicted data in the first predicted data set of the first moving object at the moment j is greater than or equal to the second threshold.

In a possible design scheme, the transceiver module is further configured to receive fourth information. The fourth information indicates that the first predicted data set of the first moving object at the moment j is determined based on a prediction model at a moment j-1 or is determined based on a prediction model at the moment j, and the prediction model at the moment j is obtained by updating the prediction model at the moment j-1.

In a possible design scheme, when the first predicted data set of the first moving object at the moment j is determined based on the prediction model at the moment j, the transceiver module is further configured to receive a first coefficient correction value at the moment j. The first coefficient correction value at the moment j is used to determine the prediction model at the moment j, the first coefficient correction value at the moment j is determined based on a reconstructed data set of the first moving object at the moment j-1, the actual sampled data set, and a second predicted data set of the first moving object at the moment j, and the second predicted data set is determined based on the reconstructed data set of the first moving object at the moment j-1 and the prediction model at the moment j-1.

In a possible design scheme, when the first predicted data set of the first moving object at the moment j is determined based on the prediction model at the moment j-1, the prediction model at the moment j is obtained by updating the prediction model at the moment j-1 based on a second coefficient correction value at the moment j, where the second coefficient correction value at the moment j is determined based on the reconstructed data set of the first moving object at the moment j-1, the reconstructed data set of the first moving object at the moment j, and the first predicted data set of the first moving object at the moment j.

In a possible design scheme, the transceiver module is further configured to send configuration information, where the configuration information includes at least one of the following: a quantization manner, a compression manner, a sampling step, or a correspondence between a compression rate and a first threshold.

In a possible design scheme, the transceiver module may include a receiving module and a sending module. The sending module is configured to implement a sending function of the communication apparatus according to the fourth aspect, and the receiving module is configured to implement a receiving function of the communication apparatus according to the fourth aspect.

In a possible design scheme, the communication apparatus according to the fourth aspect may further include a storage module, and the storage module stores a program or instructions. When the processing module executes the program or the instructions, the communication apparatus according to the fourth aspect may be enabled to perform the method according to the second aspect.

For technical effect of the communication apparatus according to the fourth aspect, refer to the technical effect of the method according to the second aspect. Details are not described herein again.

According to a fifth aspect, a communication apparatus is provided. The apparatus includes a processor and a communication interface. The communication interface is configured to communicate with a module outside the communication apparatus. The processor is configured to execute a computer program or instructions, to enable the communication apparatus to perform the method according to the first aspect or the second aspect.

According to a sixth aspect, a communication apparatus (for example, the communication apparatus may be a chip or a chip system) is provided. The communication apparatus includes a processor, configured to implement functions in the first aspect or the second aspect.

In some possible designs, the communication apparatus includes a memory. The memory is configured to store necessary program instructions and/or data.

In a possible design scheme, the processor may be integrated with the memory.

In some possible designs, when the communication apparatus is a chip system, the communication apparatus may include a chip, or may include a chip and another discrete component.

According to a seventh aspect, a communication apparatus is provided. The apparatus includes a transceiver and a processor. The transceiver is used by the communication apparatus to exchange information with another communication apparatus. The processor executes program instructions to perform the method according to the first aspect or the second aspect.

In a possible design scheme, the communication apparatus according to the seventh aspect may further include a memory. The memory and the processor may be integrated together, or may be disposed separately. The memory may be configured to store a computer program and/or data related to the method according to the first aspect or the second aspect.

It should be understood that a corresponding module, unit, or means (means) for implementing the method according to the first aspect or the second aspect is included in the fifth aspect to the seventh aspect. The module, unit, or means may be implemented by hardware, software, or hardware executing corresponding software. The hardware or the software includes one or more modules or units configured to perform functions in the foregoing methods.

It may be understood that when the communication apparatus provided in any one of the fifth aspect to the seventh aspect is a chip, the foregoing sending action/function may be understood as output, and the foregoing receiving action/function may be understood as input.

According to an eighth aspect, a computer-readable storage medium is provided. The computer-readable storage medium stores a computer program or instructions. When the computer program or instructions are run on a communication apparatus, the communication apparatus is enabled to perform the method according to the first aspect or the second aspect.

According to a ninth aspect, a computer program product including instructions is provided. When the computer program product is run on a communication apparatus, the communication apparatus may be enabled to perform the method according to the first aspect or the second aspect.

According to a tenth aspect, a communication system is provided. The system includes a terminal device configured to perform the method according to the first aspect and a network device configured to perform the method according to the second aspect.

## BRIEF DESCRIPTION OF DRAWINGS

FIG. 1 is a motion trajectory point cloud map generated when a vehicle turns according to an embodiment of this application;

FIG. 2 is a diagram of an architecture of a communication system according to an embodiment of this application;

FIG. 3 is a schematic flowchart of a data processing method according to an embodiment of this application;

FIG. 4 is a Venn diagram representing a relationship between $S_j^1$, $S_j^4$, $S_j$, and $\hat{S}_j$ according to an embodiment of this application;

FIG. 5 is a motion trajectory point cloud map of a vehicle traveling in a straight line according to an embodiment of this application;

FIG. 6 is a motion trajectory point cloud map generated when a vehicle turns according to an embodiment of this application;

FIG. 7 is a simulation comparison diagram of results of predicting sampled point cloud at a current moment by separately using moving speed-based modeling and an ODE model in a scenario with a large motion prediction error according to an embodiment of this application;

FIG. 8 is a diagram of correspondences between an NMSE and air interface overheads used for data processing and transmission according to an embodiment of this application;

FIG. 9 is a diagram of correspondences between an NMSE and air interface overheads used for data processing and transmission according to an embodiment of this application;

FIG. 10 is a diagram of a structure of a communication apparatus according to an embodiment of this application; and

FIG. 11 is a diagram of a structure of another communication apparatus according to an embodiment of this application.

## DESCRIPTION OF EMBODIMENTS

To better understand embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. During specific implementation, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of pieces of information that is pre-agreed on (for example, specified in a protocol), to reduce indication overheads to some extent. In addition, a common part of all pieces of information may be further identified and indicated in a unified manner, to reduce indication overheads caused by separately indicating same information.

Furthermore, a specific indication manner may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to, one or a combination of at least two of radio resource control (radio resource control, RRC) signaling, medium access control (medium access control, MAC) layer signaling, and physical layer signaling. The MAC layer signaling includes, for example, a MAC-control element (control element, CE), and the physical (physical, PHY) layer signaling includes, for example, DCI.

Second, numbers such as first and second in embodiments of this application are merely used for differentiation for ease of description, and are not intended to limit the scope of embodiments of this application. For example, the numbers are used to distinguish between different indication information. For another example, a first network area and a second network area are merely intended to distinguish between different areas, and are not intended to limit a sequence thereof. A person skilled in the art may understand that terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

Fourth, in embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a related concept in a specific manner for ease of understanding.

Fifth, in embodiments of this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of a plurality of items, including any combination of singular items (pieces) or plural items (pieces). For example, at least one of a, b, or c may represent a, b, c, a and b, a and c, b and c, or a, b, and c, where a, b, and c may be singular or plural.

To better understand embodiments of this application, the following first describes related technologies in embodiments of this application.

In a communication sensing scenario, a sensing device collects data of a target object. The collected data is usually discrete point data. The discrete point data may be two-dimensional or three-dimensional discrete point data. Based on processing of discrete point data collected in a plurality of frames, purposes such as imaging, environment reconstruction, and target detection can be implemented. The discrete point data may also be referred to as point cloud data. To complete a sensing task, the sensing device sends the collected point cloud data of the target object to a network device, so that a processing device obtains a motion trajectory, an image, and the like of the target object.

The point cloud data (point cloud data) is a set of vectors in a three-dimensional coordinate system. Scanned data is recorded in a form of points. Each point includes three-dimensional coordinates, and may carry other information about an attribute of the point, for example, a color, reflectivity, and intensity. For example, point cloud data (which may also be referred to as laser point cloud data) measured based on a laser measurement principle may include information such as three-dimensional coordinates and laser reflection intensity (intensity), point cloud data obtained based on a photogrammetry principle may include information such as three-dimensional coordinates and a color, where information about the color may be color data in the red, green, blue (red, green, blue, RGB) format, and point cloud data obtained with reference to the laser measurement principle and the photogrammetry principle may include information such as three-dimensional coordinates, laser reflection intensity, and a color.

The point cloud data is important raw data in the communication sensing scenario, and may be applied to scenarios such as imaging, environment reconstruction, and target detection.

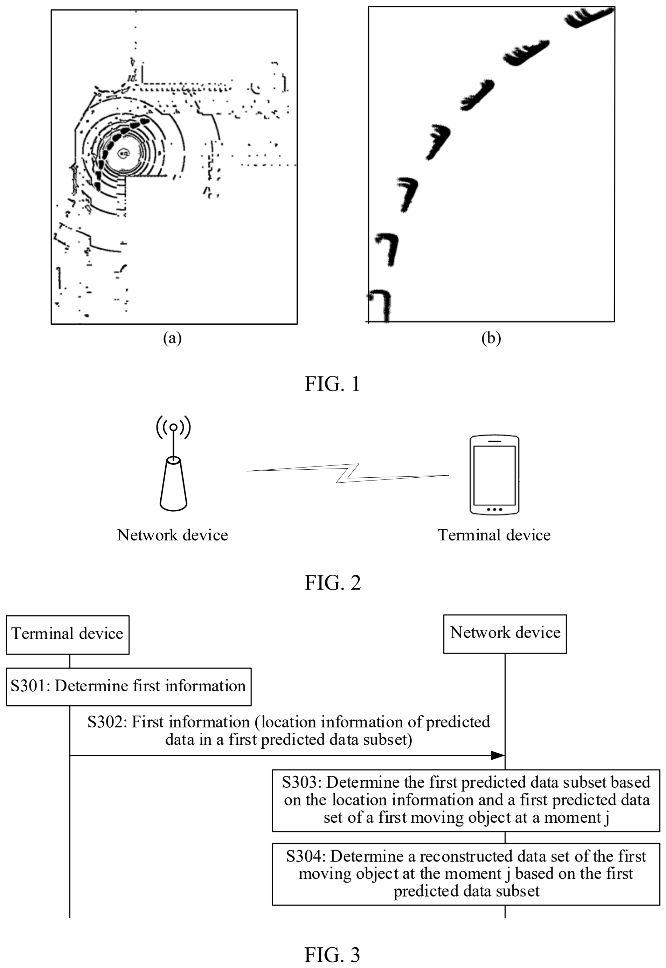

When sensing an ambient environment, a single terminal device can obtain only point cloud data at a single moment. Therefore, when performing tasks such as multi-angle observation, motion detection, and behavior prediction, a plurality of frames of point cloud data information that has a time sequence feature and that is sensed by different terminal devices at a plurality of locations and from a plurality of angles needs to be sent to a base station for information fusion, to implement joint sensing. In a multi-frame joint sensing scenario, because a large amount of point cloud data is exchanged, a large quantity of air interface resources are occupied. Therefore, the point cloud data is usually compressed, for example, only point cloud generated by an object with a change (for example, the object moves or a viewpoint changes) between consecutive frames is transmitted, to greatly reduce an amount of data transmitted in each point cloud frame. For example, with user authorization, in a scenario shown in (a) in FIG. 1, when a vehicle turns, point cloud data that is of a trajectory of the vehicle and that is generated at different moments is shown in (b) in FIG. 1.

Draco (Draco) is a general point cloud data compression algorithm. However, Draco does not fully use time correlation between temporal point cloud data when compressing the temporal point cloud data. Draco can use time correlation between consecutive point cloud frames and avoid transmitting overlapping points in the consecutive frames only when a sampling time interval is very short and there are a large quantity of repeated points in the consecutive frames. Otherwise, Draco needs to separately compress and transmit point cloud data of each frame.

Moving picture experts group (moving picture experts group, MPEG)-point cloud compression (point cloud compression, PCC) is an algorithm that directly compresses point cloud data. Although the algorithm uses time correlation between temporal point cloud, the algorithm is not suitable for real-time point cloud reporting due to high complexity of the algorithm.

A solution for modeling time correlation by using moving speed information uses time correlation between temporal point cloud data, but a disadvantage of the solution is that only a translational displacement can be considered, and a prediction result of modeling lacks rotation information. When a motion trajectory has a large rotation angle, the solution cannot accurately predict data of a moving object.

For an algorithm for modeling time correlation based on Taylor expansion (Taylor expansion), when Taylor expansion is truncated to information about a first-order spatial derivative, an equation is equivalent to a linear transport equation (transport equation) ($u_t = Au_x$), and disadvantages of this method are as follows: Because discretization is required for both spatial and time domains, a large error is caused. Modeling using this formula requires scene data irrelevant to a moving object, that is, redundant information irrelevant to target compressed data. When Taylor expansion is truncated to information about a second-order spatial derivative, disadvantages of this method are that a calculation amount increases and training cost increases.

An algorithm for modeling time correlation based on Kalman filter (Kalman filter) is to calculate a distribution of point cloud data according to the Bayesian rule by using a linear model. A disadvantage of this algorithm is that data needs to comply with a Gaussian distribution, which does not match a characteristic of point cloud data.

Modeling time correlation based on an autoregressive (autoregressive, AR) model (model) is to calculate a model coefficient at a current moment t to represent a weight of a sum of data at the first t-1 moments. Disadvantages of this algorithm are as follows: If three-dimensional information is used for system calculation, three axes of the AR model need to share a coefficient, and a degree of freedom is low. If a same degree of freedom is required, the AR model needs to decouple (decouple) the three-dimensional information.

Embodiments of this application provide a data processing method. Through prediction of sampled data of a moving object, air interface resource overheads can be reduced, and a trajectory of the moving object can be predicted.

Technical solutions provided in embodiments of this application may be applied to a wireless communication system having a sensing function, for example, a wireless fidelity (wireless fidelity, Wi-Fi) system, an ultra-wideband (ultra-wideband, UWB) communication system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, and a future communication system such as a 6G mobile communication system.

In the technical solutions of this application, processing, for example, one or all of possible processing behaviors such as collection, storage, use, processing, transmission, provision, and disclosure, of point cloud data of a trajectory of a moving object complies with related laws and regulations, and does not violate public order and customs. For example, specifically, collection of some data is performed with authorization of a related user.

For example, FIG. 2 is a diagram of an architecture of a communication system according to an embodiment of this application. As shown in FIG. 2, the communication system includes a network device and a terminal device. The network device and the terminal device may directly communicate with each other, or may communicate with each other through forwarding by another device. It should be noted that FIG. 2 shows one network device and one terminal device as an example. A quantity of network devices and a quantity of terminal devices are not limited in embodiments of this application. It should be understood that FIG. 2 is a simplified diagram provided as an example for ease of understanding. The communication system may further include another network device and/or another terminal device that are/is not shown in FIG. 2.

In embodiments of this application, the network device may also be referred to as an access network (radio access network, RAN) node, an access network device, a RAN entity, an access node, or the like. The network device is located on a network side of the communication system, and is configured to help the terminal device implement wireless access. The network device is a device that has a wireless transceiver function, or may be disposed in a chip or a chip system of the device. The network device includes but is not limited to a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The network device may be a macro base station, a micro base station, an indoor station, a relay node, a donor node, or a radio controller in a centralized radio access network (centralized radio access network, CRAN) scenario. Optionally, the RAN node may alternatively be a server, a wearable device, a vehicle, a vehicle-mounted device, or the like. For example, an access network device in a V2X technology may be a roadside unit (roadside unit, RSU). All or some functions of the network device in this application may alternatively be implemented by using a software function running on hardware, or may be implemented by using a virtualized function instantiated on a platform (for example, a cloud platform). The network device in this application may alternatively be a logical node, a logical module, or software that can implement all or some functions of the network device.

In another possible scenario, a plurality of RAN nodes coordinate to assist the terminal device in implementing wireless access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open (open, O) RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

The terminal device in embodiments of this application is a terminal that accesses the communication system and has a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units. The vehicle may use the vehicle-mounted module, the vehicle-mounted assembly, the vehicle-mounted part, the vehicle-mounted chip, or the vehicle-mounted unit that is built in the vehicle, to implement the method provided in this application.

In this application, the terminal device that performs a method embodiment may be the terminal device, may be a part of the terminal device, for example, a processor, a chip, or a chip system of the terminal device, or may be a logical module or software that implements all or some functions related to the terminal device.

In this application, the network device that performs a method embodiment may be the network device, may be a part of the network device, for example, a processor, a chip, or a chip system of the network device, or may be a logical module or software that implements all or some functions related to the network device.

The following specifically describes the data processing method provided in embodiments of this application with reference to FIG. 3 to FIG. 9.

In embodiments of this application, a corresponding prediction model is deployed on both devices at a receive end and a transmit end, to predict sampled data of a moving object. For sampled data of the moving object that is generated at different moments, in a process of predicting an actual sampled data set at a current moment by using the prediction model, the receive end and the transmit end synchronously update a coefficient matrix of the prediction model, so that coefficient matrices at the receive end and the transmit end are consistent, to predict an actual sampled data set at a next moment. The following describes in detail the data processing method provided in embodiments of this application by using an example in which a sending device is a terminal device and a receiving device is a network device.

For example, FIG. 3 is a schematic flowchart of a data processing method according to an embodiment of this application. The method is applicable to the communication system shown in FIG. 2.

As shown in FIG. 3, the data processing method includes the following steps.

S301: A terminal device determines first information.

The first information includes location information of predicted data in a first predicted data subset of a first predicted data set of a first moving object at a moment j (briefly referred to as a first predicted data set at the moment j below), the location information is used to determine a reconstructed data set of the first moving object at the moment j (briefly referred to as a reconstructed data set at the moment j below), and j is a positive integer greater than 2.

S302: The terminal device sends the first information to a network device. Correspondingly, the network device receives the first information from the terminal device.

The first information may be carried in a MAC-CE or RRC signaling for sending.

S303: The network device determines the first predicted data subset based on the location information and the first predicted data set of the first moving object at the moment j.

S304: The network device determines the reconstructed data set of the first moving object at the moment j based on the first predicted data subset.

The following separately describes in detail related content in S301, S303, and S304.

For S301:

In embodiments of this application, the first predicted data subset includes predicted data that matches each piece of sampled data in a first sampled data subset of an actual sampled data set of the first moving object at the moment j (briefly referred to as an actual sampled data set at the moment j below), the first predicted data subset is used to determine the reconstructed data set of the first moving object at the moment j (briefly referred to as the reconstructed data set at the moment j below), and the reconstructed data set of the first moving object at the moment j is used to determine a first predicted data set of the first moving object at a moment j+1 (briefly referred to as a reconstructed data set at the moment j+1 below).

The actual sampled data set at the moment j may be a set of data (for example, trajectory data generated by the first moving object) that is generated by the first moving object and that is obtained through sampling at the moment j. Specifically, during actual sampling, all data obtained through sampling at each moment includes data generated by a static background and data generated by the first moving object. In embodiments of this application, an actual sampled data set at each moment is a set of data that is generated by the first moving object and that is extracted from all data obtained through sampling at the corresponding moment, and does not include data generated by a static background. Extraction of the set of data that is generated by the first moving object and that is obtained through sampling at each moment may be implemented in an artificial intelligence (artificial intelligence, AI) manner or a non-AI manner. This is not specifically limited herein. For a specific implementation process, refer to related descriptions in an existing solution. Details are not described herein again.

In embodiments of this application, the moment j may be understood as a current moment, a moment j-1 is a previous moment, and the moment j+1 is a next moment, to represent a time sequence feature of data sets.

The first predicted data set at the moment j may be data that is relative to the first moving object at the moment j and that is obtained through prediction, and may be understood as a predicted actual sampled data set at the moment j. In embodiments of this application, the first predicted data set at the moment j is obtained through prediction based on a reconstructed data set at the moment j-1. In other words, the first predicted data set at the current moment is obtained through prediction by using the reconstructed data set at the previous moment. For example, the first predicted data set at the moment j may be obtained through prediction based on a prediction model (an algorithm model), the reconstructed data set at the previous moment is used as an input of the prediction model, and the first predicted data set at the moment j is obtained through calculation and output by the prediction model. The prediction model may be a linear ordinary differential equation model. For example, the prediction model may be an ODE model.

The reconstructed data set at the moment j may be sampled data that is relative to the first moving object at the moment j and that is obtained by reconstructing the predicted data in the first predicted data subset, may be understood as a reconstructed actual sampled data set at the moment j, and may represent a trajectory of the first moving object at the current moment. In embodiments of this application, each piece of data in a sampled data set, a predicted data set, and a reconstructed data set is usually two-dimensional or three-dimensional discrete point data. For example, the data set may be point cloud.

After determining the first predicted data set at the moment j, the terminal device may compare the actual sampled data set at the moment j with the first predicted data set at the moment j, to determine the first information. In embodiments of this application, the predicted data in the first predicted data subset is predicted data that matches partial sampled data (the first sampled data subset) of the actual sampled data set at the moment j. In other words, partial sampled data (the first sampled data subset) in the actual sampled data set at the moment j is obtained through prediction, each piece of predicted data in the first predicted data subset is basically the same as or slightly different from matched sampled data, and the sampled data in the first sampled data subset may be represented by using predicted data in the first predicted data subset.

It should be understood that, for any piece of sampled data in the actual sampled data set at the moment j, for example, first sampled data, at least one piece of predicted data in the first predicted data set at the moment j is a prediction of the first sampled data, but whether the predicted data matches the first sampled data needs to be determined through comparison.

The first sampled data is used as an example. After determining the first predicted data set at the moment j, the terminal device may compare the first sampled data with all predicted data in the first predicted data set at the moment j, for example, calculate a distance between the first sampled data and each piece of predicted data in the first predicted data set at the moment j, and use predicted data that is in the first predicted data set at the moment j and that is closest to the first sampled data as predicted data of the first sampled data. A distance between the predicted data that is closest to the first sampled data and the first sampled data may be referred to as a first distance. In other words, predicted data that is in the first predicted data set at the moment j and that is at the first distance from each piece of sampled data is a prediction of the sampled data. In the foregoing example, the predicted data that is closest to the first sampled data is used as the predicted data of the first sampled data. The predicted data of the first sampled data may alternatively be predicted data whose distance from the first sampled data is within a threshold range. In this case, the first distance is a distance between the first sampled data and the predicted data whose distance from the first sampled data is within the threshold range. This is not limited in embodiments of this application. The following uses an example in which the first distance is a shortest distance for description.

In embodiments of this application, because each point in the sampled data set, the predicted data set, and the reconstructed data set is usually two-dimensional or three-dimensional point data, a distance between sampled data and predicted data is usually a Euclidean distance. The first distance may be understood as an error between the sampled data (a real value) and the predicted data (a predicted value) corresponding to the sampled data.

For example, the actual sampled data set $\boldsymbol{y}_j$ at the moment j includes $M_j$ pieces of sampled data ($a_1$ to $a_{M_j}$), that is, $\boldsymbol{y}_j \in \mathrm{R}^{M_j \times 3}$, the $M_j$ pieces of sampled data form a set $S_j$, the first predicted data set $\widehat{\boldsymbol{y}}_j^1$ at the moment j includes $N_j$ pieces of predicted data ($b_1$ to $b_{N_j}$), that is, $\widehat{\boldsymbol{y}}_j^1 \in \mathrm{R}^{N_j \times 3}$, the $N_j$ pieces of predicted data form a set $\hat{S}_j$, and $M_j$ and $N_j$ are positive integers greater than 1. Therefore, for any piece of sampled data $a_m$ ($1 \leq m \leq M_j$, and m is a positive integer) in $S_j$, there is a Euclidean distance between the sampled data and each piece of predicted data in the set $\hat{S}_j$ (there are $N_j$ Euclidean distances). In this case, a shortest Euclidean distance in the $N_j$ Euclidean distances is the first distance, the first distance may be represented by $D(a_m, b_{a_m})$, and predicted data at the first distance from $a_m$ is predicted data (represented by $b_{a_m}$, where $b_{a_m} \in \hat{S}_j$) of the sampled data $a_m$. Therefore, each piece of sampled data in j sampled data sets has corresponding predicted data in the first predicted data set at the moment j.

Further, the terminal device may determine whether the first sampled data matches predicted data at the first distance from the first sampled data, for example, determine whether the first distance of the first sampled data meets an error requirement (for example, a first threshold). If the first distance meets the error requirement (for example, is less than the first threshold), it may be considered that the predicted data at the first distance from the first sampled data matches the first sampled data. In this case, the predicted data at the first distance from the first sampled data may be used as predicted data in the first predicted data subset, and the first sampled data may be used as sampled data in the first sampled data subset. In other words, that sampled data matches predicted data may be that a distance between the sampled data and the predicted data is the first distance, and the first distance meets the error requirement. It may be considered that the sampled data may be obtained through prediction, and the predicted data may represent the sampled data. In this case, the first predicted data subset may include predicted data whose distance from each sampling point in the first sampled data subset is less than the first threshold, and a distance between the predicted data whose distance from the sampled data is less than the first threshold and the sampled data is the first distance.

If the first distance does not meet the error requirement (for example, is greater than or equal to the first threshold), it may be considered that the predicted data at the first distance from the first sampled data does not match the first sampled data. In this case, the predicted data at the first distance from the first sampled data does not belong to the first predicted data subset, and the first sampled data does not belong to the first sampled data subset either. In other words, that sampled data matches predicted data may be that a distance between the sampled data and the predicted data is the first distance, but the first distance does not meet the error requirement (an error is large), and it may be considered that the sampled data cannot be obtained through prediction.

In an example, the error requirement is the first threshold $\varepsilon_j$, the first sampled data subset is represented by $S_j^1$,

the first predicted data subset is represented by $\hat{S}_j^1$ , and $M_j = N_j = 10$, that is, $\boldsymbol{y}_j$ includes sampled data $a_1$ *to* $a_{10}$, and $\widehat{\boldsymbol{y}}_j^1$ includes predicted data $b_1$ *to* $b_{10}$. Predicted data at the first distance from $a_1$ is $b_3$, predicted data at the first distance from $a_2$ is $b_5$, predicted data at the first distance from $a_3$ is $b_1$, predicted data at the first distance from $a_4$ is $b_7$, predicted data at the first distance from $a_5$ is $b_9$, predicted data at the first distance from $a_6$ is $b_2$, predicted data at the first distance from $a_7$ is $b_8$, predicted data at the first distance from $a_8$ is $b_4$, predicted data at the first distance from $a_9$ is $b_6$, and predicted data at the first distance from $a_{10}$ is $b_{10}$. $D(a_1,b_3)$, $D(a_3,b_1)$, $D(a_4,b_7)$, and $D(a_7,b_8)$ are all less than $\varepsilon_j$, and $D(a_2,b_5)$, $D(a_5,b_9)$, $D(a_6,b_2)$, $D(a_8,b_4)$, $D(a_9,b_6)$, and $D(a_{10},b_{10})$ are all greater than or equal to $\varepsilon_j$. In this case, $S_j^1 = \{a_1, a_3, a_4, a_7\}$ , and $\hat{S}_j^1 = \{b_1,\ b_3,\ b_7,\ b_8\}$ . In other words, a distance between the predicted data in the first predicted data subset and the matched sampled data in the first sampled data subset is less than the first threshold. In this case, it may be considered that $b_3 \approx a_1$, $b_1 \approx a_3$, $b_7 \approx a_4$, and $b_8 \approx a_7$.

Therefore, the terminal device may notify the network device of location information of each piece of predicted data in the first predicted data subset by using the first information, and does not need to send the sampled data in the first sampled data subset to the network device. Therefore, an objective of reducing data transmission overheads is achieved. In embodiments of this application, the location information of each piece of predicted data in the first predicted data subset may be a location sequence of each piece of predicted data in the first predicted data subset in the first predicted data set at the moment j, or may be a spatial location of each piece of predicted data in the first predicted data subset. This is not limited herein. The following uses an example in which the location information is the location sequence of each piece of predicted data in the first predicted data subset in the first predicted data set at the moment j for description. For example, a location of each piece of predicted data in the first predicted data set at the moment j may be indicated by using a location index. Correspondingly, the network device may determine, based on the location information indicated by the first information, which piece of predicted data in the first predicted data set at the moment j is accurate and may be used to reconstruct the data set.

In a possible design scheme, for sampled data, in the actual sampled data set at the moment j, other than the sampled data in the first sampled data subset, an error between the sampled data and predicted data is large, and the sampled data cannot be obtained through prediction, so that the terminal device may directly compress remaining sampled data and send the compressed data to the network device by using third information. The third information includes compressed data of each piece of sampled data in a third sampled data subset. In this case, the third sampled data subset includes the sampled data, in the actual sampled data set at the moment j, other than the sampled data in the first sampled data subset. For example, the third sampled data subset is the following fourth sampled data subset.

Refer to the foregoing example. Sampled data whose first distance is greater than or equal to $\varepsilon_j$ may be used as the fourth sampled data subset, in other words, the fourth sampled data subset includes the sampled data, in the actual sampled data set at the moment j, other than the sampled data in the first sampled data subset, and corresponding predicted data may be used as the fourth predicted data subset. For example, the fourth sampled data subset is $S_j^4 = \{a_2,\ a_5,\ a_6,\ a_8, a_9,\ a_{10}\}$ , and the fourth predicted data subset is $\hat{S}_j^4 = \{b_2,\ b_4,\ b_5,\ b_6,\ b_9,\ b_{10}\}$ .

Therefore, for sampled data in $S_j^4 = \{a_2,\ a_5,\ a_6,\ a_8,\ a_9,\ a_{10}\}$ , the terminal device compresses and sends the sampled data to the network device, and a compression manner may be quantization entropy coding, Draco, or the like. In other words, the terminal device needs to notify the network device of sampled data that cannot be represented by predicted data.

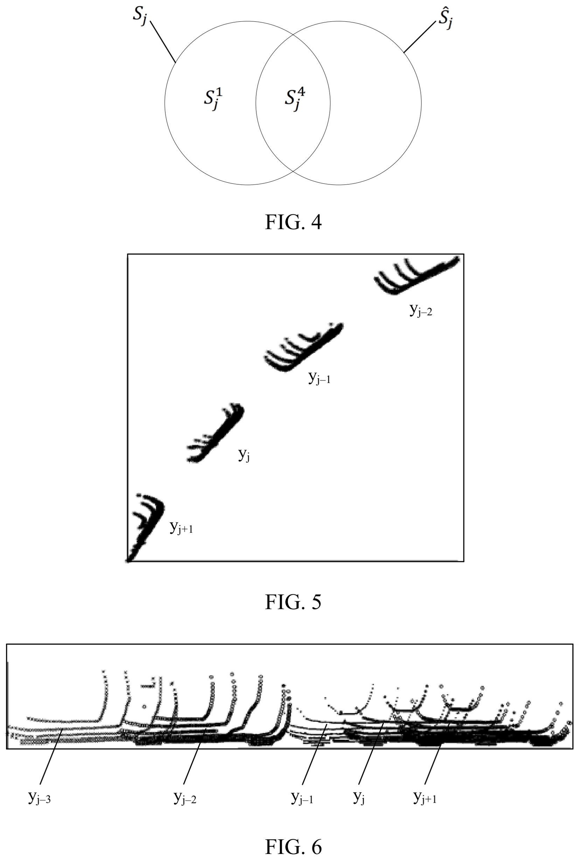

It should be understood that $S_j^1 \cap S_j^4 = 0$, $S_j^1 \cup S_j^4 = S_j$, $\hat{S}_j^1 \cap \hat{S}_j^4 = 0$, $\hat{S}_j^1 \cup \hat{S}_j^4 = \hat{S}_j$ , and a relationship between $S_j^1$ , $S_j^4$ , $S_j$, and $\hat{S}_j$ may be represented by using a Venn diagram shown in FIG. 4.

In this design scheme, the location information in the first information may include a location index of at least one of the following predicted data: the predicted data in the first predicted data subset, or predicted data, in the first predicted data set at the moment j, other than the predicted data in first predicted data subset (for example, the fourth predicted data subset). For the location index of the predicted data in the first information, the terminal device may compress and send the location index through entropy coding or entropy coding after calculation of a difference between adjacent location indexes.

Refer to the foregoing example. $M_j = N_j = 10$, that is, $\boldsymbol{y}_j$ includes the sampled data $a_1$ *to* $a_{10}$, and $\widehat{\boldsymbol{y}}_j^1$ includes the predicted data $b_1$ *to* $b_{10}$. Location index values corresponding to $b_1$ *to* $b_{10}$ are 0 to 9, which correspond to an index set $\hat{I}_j$.

$$S_j^1 = \{a_1, a_3, a_4, a_7\}, \quad S_j^4 = \{a_2,\ a_5,\ a_6, a_8,\ a_9,\ a_{10}\}, \quad \hat{S}_j^1 = \{b_1,\ b_3,\ b_7,\ b_8\} \qquad , \qquad \text{and}$$

$\hat{S}_j^4=\{b_2,\ b_4,\ b_5,\ b_6,\ b_9,\ b_{10}\}$ . Therefore, the first information may include a location index of the predicted data in the first predicted data subset, which is, for example, represented as a first index set $X_j^1$ , where $X_j^1=\{0,\ 2,\ 6,\ 8\}$ ; or the first information may include an index of the predicted data, in the first predicted data set at the moment j, other than the predicted data in the first predicted data subset (predicted data in the fourth predicted data subset), which is, for example, represented as a fourth index set $X_j^4$ , where $X_j^4=\{1,\ 3,\ 4,\ 5,\ 8,\ 9\}$ . It should be understood that $X_j^1 \cap X_j^4=0$ , and $X_j^1 \cup X_j^2 = \hat{I}_j$ .

Further, to reduce air interface overheads, the first information may include a location index of predicted data in a set with a smaller quantity of pieces of predicted data in the first predicted data subset and the fourth predicted data subset. For example, a quantity of pieces of predicted data in $\hat{S}_j^1$ is less than a quantity of pieces of predicted data in $\hat{S}_j^4$ , and correspondingly, a quantity of indexes in $X_j^1$ is less than a quantity of indexes in $X_j^4$ . In this case, the first information may include $X_j^1$ , that is, the location index of the predicted data in the first predicted data subset.

It should be understood that the first information further includes information indicating a predicted data set to which the predicted data corresponding to the location index belongs. For example, one bit is used for indication. For example, 0 indicates the first predicted data subset or the first index set, and 1 indicates the fourth predicted data subset or the fourth index set. The converse also applies.

In another possible design scheme, for sampled data, in the actual sampled data set at the moment j, other than the sampled data in the first sampled data subset, the terminal device may further divide the sampled data to obtain a second sampled data subset, for example, divide the sampled data in $S_j^4$ in the foregoing design scheme. For each piece of sampled data in the second sampled data subset, compressed data of a difference of each piece of sampled data is sent by using second information. The difference is a distance between the sampled data in the second sampled data subset and corresponding predicted data in a second predicted data subset. In other words, after determining the first predicted data subset and the first sampled data subset, the terminal device may further divide sampled data other than the sampled data in the first sampled data subset into two parts. One part, that is, the second sampled data subset, is sent in a form of a difference, and the remaining part is still directly sent in a form of compressed data of sampled data.

In embodiments of this application, the second predicted data subset includes predicted data that is in the first predicted data set and whose distance from each piece of sampled data in the second sampled data subset is greater than or equal to the first threshold and less than a second threshold. In other words, the distance between the sampled data in the second sampled data subset and the corresponding predicted data in the second predicted data subset may be greater than or equal to the first threshold and less than the second threshold. For example, the predicted data that is in the second predicted data subset and that corresponds to the sampled data in the second sampled data subset may be predicted data at a first distance from the sampled data in the second sampled data subset, and the first distance is greater than or equal to the first threshold and less than the second threshold. In this case, a difference of each piece of sampled data in the second sampled data subset is the first distance. It should be understood that the sampled data in the second sampled data subset is sampled data with a moderate error relative to the predicted data. Through sending of a difference between the predicted data and the sampled data with the moderate error relative to the predicted data, an amount of data sent over an air interface can be further reduced.

The second threshold is $\delta_j$. Still refer to the foregoing example. D($a_2$,$b_5$), D($a_5$,$b_9$), D($a_6$,$b_2$), D($a_8$,$b_4$), D($a_9$,$b_6$), and D($a_{10}$,$b_{10}$) are all greater than or equal to $\varepsilon_j$. If D($a_2$,$b_5$) and D($a_5$,$b_9$) are both greater than or equal to $\varepsilon_j$ and less than $\delta_j$, and D($a_6$,$b_2$), D($a_8$,$b_4$), D($a_9$,$b_6$), and D($a_{10}$,$b_{10}$) are all greater than $\delta_j$, it may be determined that the second sampled data subset is $S_j^2=\{a_2,\ a_5\}$ , and the second predicted data subset is $\hat{S}_j^2=\{b_5,\ b_9\}$ . Therefore, the terminal device may compress and send D($a_2$,$b_5$) and D($a_5$,$b_9$) to the network device by using the second information.

Sampled data, in the actual sampled data set at the moment j, other than the sampled data in the first sampled data subset and the sampled data in the second sampled data subset may be represented as a third sampled data subset $S_j^3=\{a_6,\ a_8,\ a_9,\ a_{10}\}$ . It should be understood that $S_j^1 \cup S_j^2 \cup S_j^3 = S_j$, $S_j^2 \cup S_j^3 = S_j^4$ , and $S_j^2 \cap S_j^3 = 0$ . Therefore, for sampled data in the third sampled data subset, the terminal device may also send the sampled data to the network device by using third information. The third information includes compressed data of each piece of sampled data in the third sampled data subset. In this case, the third sampled data subset includes the sampled data, in the actual sampled data set, other than the sampled data in the first sampled data subset and the sampled data in the second sampled data subset. It should be understood that a distance between the sampled data in the third sampled data subset and corresponding predicted data in the first predicted data set at the moment j is greater than or equal to the second threshold, in other words, a first distance of sampled data in the third sampled data subset is greater than or equal to the second threshold.

In this design scheme, because compressed data of a difference is sent for partial sampled data (the second sampled data subset), to enable the network device to determine a value of the sampled data for which the difference is sent, the network device needs to be enabled to determine predicted data that is in the first predicted data set at the moment j and that is used to obtain the difference with the partial sampled data, so that the value of the sampled data in the second sampled data subset can be determined by adding the corresponding difference to the determined predicted data.

Based on this, the location information in the first information may include location indexes of at least two of the following predicted data: the predicted data in the first predicted data subset, the predicted data in the second predicted data subset, or predicted data, in the first predicted data set at the moment j, other than the predicted data in the first predicted data subset and the predicted data in the second predicted data subset. Therefore, a location index of a third type of predicted data can be determined based on location indexes of any two types of predicted data, to reconstruct the actual sampled data set at the moment j.

Predicted data, in the first predicted data set at the moment j, other than the predicted data in the first predicted data subset and the predicted data in the second predicted data subset may be represented as a third predicted data subset. For example, in the foregoing example, $\widehat{y}_j^1$ includes the predicted data $b_1$ to $b_{10}$, the first predicted data subset is $\hat{S}_j^1=\{b_1,\ b_3,\ b_7,\ b_8\}$, and the second predicted data subset is $\hat{S}_j^2=\{b_5,\ b_9\}$. In this case, the third predicted data subset is $\hat{S}_j^3=\{b_2,b_4,b_6,b_{10}\}$. Therefore, the first information may include location indexes of predicted data in any two predicted data subsets in $\hat{S}_j^1$, $\hat{S}_j^2$, and $\hat{S}_j^3$. It should be understood that $\hat{S}_j^1 \cup \hat{S}_j^2 \cup \hat{S}_j^3 = \hat{S}_j$, $\hat{S}_j^2 \cup \hat{S}_j^3 = \hat{S}_j^4$, and $\hat{S}_j^2 \cap \hat{S}_j^3 = 0$.

Further, to reduce air interface overheads, the first information may also include location indexes of predicted data in two subsets, in three predicted data subsets, other than a subset with a largest quantity of pieces of predicted data. For example, in the foregoing $\hat{S}_j^1$, $\hat{S}_j^2$, and $\hat{S}_j^3$, a quantity of pieces of predicted data in $\hat{S}_j^1$ and a quantity of pieces of predicted data in $\hat{S}_j^3$ are the same and are the largest. Therefore, the first information may include location indexes of the predicted data in $\hat{S}_j^1$ and location indexes of the predicted data in $\hat{S}_j^2$, or location indexes of the predicted data in $\hat{S}_j^2$ and location indexes of the predicted data in $\hat{S}_j^3$. The location indexes of the predicted data in $\hat{S}_j^1$ may be represented as a first index set $X_j^1=\{0,\ 2,\ 6,\ 8\}$, the location indexes of the predicted data in $\hat{S}_j^2$ may be represented as a second index set $X_j^2=\{4,\ 8\}$, and the location indexes of the predicted data in $\hat{S}_j^3$ may be represented as a third index set $X_j^3=\{1,\ 3,\ 5,\ 9\}$. In other words, that the first information includes the location indexes of predicted data in the two subsets, in the three predicted data subsets, other than the subset with the largest quantity of pieces of predicted data may also be represented as that the first information includes location indexes in two index sets, in three index sets, other than a set with a largest quantity of location indexes. $X_j^1 \cup X_j^2 \cup X_j^3 = \hat{I}_j$, $X_j^1 \cap X_j^2 \cap X_j^3 = 0$, and $X_j^2 \cup X_j^3 = X_j^4$.

It should be understood that the first information further includes information indicating two predicted data subsets to which the predicted data corresponding to the location indexes belongs. For example, two bits may be used for indication. For example, 00 indicates the first predicted data subset and the second predicted data subset (equivalent to the first index set and the second index set), 01 indicates the second predicted data subset and the third predicted data subset (equivalent to the second index set and the third index set), and 10 indicates the first predicted data subset and the third predicted data subset (equivalent to the first index set and the fourth index set).

It should be understood that, a quantity of pieces of predicted data in the first predicted data set at the moment j may be greater than or equal to a quantity of pieces of sampled data in the actual sampled data set at the moment j, that is, $N_j \geq M_j$. In other words, one piece of sampled data may correspond to a plurality of pieces of predicted data, but there is still only one first distance between the sampled data and the plurality of pieces of predicted data. Refer to the foregoing example. A difference from the foregoing example is that $M_j = 10$ and $N_j = 12$, that is, $y_j$ includes sampled data $a_1$ to $a_{10}$, and $\widehat{y}_j^1$ includes predicted data $b_1$ to $b_{12}$. A distance between $a_1$ and $b_3$, a distance between $a_1$ and $b_{11}$, and a distance

between $a_1$ and $b_{12}$ are basically the same. It may be considered that predicted data corresponding to $a_1$ includes $b_3$, $b_{11}$, and $b_{12}$, but predicted data (for example, $b_{11}$) at a shortest distance (that is, first distance) from $a_1$ is still selected as predicted data of $a_1$. In this case, $\hat{S}_j^1 = \{b_1, b_7, b_8, b_{11}\}$, and $\hat{S}_j^4 = \{b_2, b_3, b_4, b_5, b_6, b_9, b_{10}, b_{12}\}$.

Therefore, after determining the first information, the terminal device may obtain the reconstructed data set at the moment j based on the predicted data in the first predicted data subset and the sampled data, in the actual sampled data set at the moment j, other than the sampled data in the first sampled data subset, to perform prediction and reconstruction of a next actual sampled data set. Still refer to the foregoing example. The first predicted data subset $\hat{S}_j^1 = \{b_1, b_3, b_7, b_8\}$, the sampled data, in the actual sampled data set at the moment j, other than the sampled data in the first sampled data subset is $S_j^4 = \{a_2, a_5, a_6, a_8, a_9, a_{10}\}$, and the reconstructed data set at the moment j may be represented as $\tilde{y}_j$ ={$b_3 \approx a_1$, $a_2$, $b_1 \approx a_3$, $b_7 \approx a_4$, $a_5$, $a_6$, $b_8 \approx a_7$, $a_8$, $a_9$, $a_{10}$}.

In embodiments of this application, one data processing process of the terminal device includes data set prediction, data set sending, and data set reconstruction. In other words, for a sampled data set at each moment, a process of predicting the sampled data set, sending the sampled data set, and reconstructing the sampled data set needs to be performed. In addition, one prediction model update is performed in each data processing process, to implement a next data processing process. The foregoing specifically describes a specific process of sending a data set and reconstructing the data set. The following separately describes two data set prediction design schemes in embodiments of this application.

In a data set prediction process, the first predicted data set at the moment j is obtained based on a prediction model by using the reconstructed data set at the moment j-1. In embodiments of this application, the first predicted data set at the moment j may be determined based on the prediction model at the moment j-1 or the prediction model at the moment j, and the prediction model at the moment j is obtained by updating a coefficient matrix of the prediction model at the moment j-1.

In a possible design scheme, the first predicted data set at the moment j is a predicted data set output by the prediction model at the moment j based on the reconstructed data set at the moment j-1. In other words, the first predicted data set at the current moment is obtained based on the prediction model at the current moment, the prediction model at the current moment (the moment j) is obtained by updating the coefficient matrix of the prediction model at the previous moment (the moment j-1), the prediction model at the previous moment (the moment j-1) is used to predict the first predicted data set at the previous moment (the moment j-1), and the prediction model at the previous moment (the moment j-1) is obtained by updating a coefficient matrix of a prediction model at a moment (a moment j-2) before the previous moment. The rest may be deduced by analogy.

In this design scheme, the terminal device predicts the actual sampled data set at the current moment after updating the prediction model at the previous moment to obtain the prediction model at the current moment. Correspondingly, when predicting an actual sampled data set at the next moment (the moment j+1), the terminal device also needs to update the prediction model at the current moment before performing prediction.

In embodiments of this application, before the first predicted data set at the moment j is determined, the prediction model at the moment j is obtained by updating the prediction model at the moment j-1 based on a first coefficient correction value at the moment j, where the first coefficient correction value at the moment j is determined based on the reconstructed data set at the moment j-1, the actual sampled data set at the moment j, and a second predicted data set of the first moving object at the moment j (briefly referred to as a second predicted data set at the moment j below), and the second predicted data set at the moment j is determined based on the reconstructed data set at the moment j-1 and the prediction model at the moment j-1.

For example, the second predicted data set at the moment j may meet the following relationship:

$$\hat{y}_j^2 = \tilde{y}_{j-1} + \Delta t \tilde{y}_{j-1}(A_{j-1})^T.$$

$\hat{y}_j^2$ is the second predicted data set at the moment j, $\tilde{y}_{j-1}$ is the reconstructed data set at the moment j-1, $\Delta t$ is a sampling time interval, and $A_{j-1}$ is a first coefficient matrix of the prediction model at the moment j-1. In this case, the second predicted data set at the moment j may be considered as the first predicted data set at the moment j in the foregoing design scheme.

The first coefficient correction value at the moment j may meet the following relationship:

$$(C_j^1)^T = \tilde{y}_{j-1}^\dagger \left( \frac{y_j - \hat{y}_j^2}{\Delta t} \right).$$

$C_j^1$ is the first coefficient correction value at the moment j, $\tilde{y}_{j-1}^\dagger$ is a pseudoinverse of the reconstructed data set at the moment j, and $y_j$ is the actual sampled data set at the moment j.

Therefore, the terminal device may update the prediction model at the moment j-1 based on the first coefficient correction value at the moment j, to obtain the prediction model at the moment j, that is, $A_j = A_{j-1} + C_j^1$. $A_j$ is a coefficient matrix of the prediction model at the moment j. Therefore, the terminal device obtains the first predicted data set at the moment j by using the reconstructed data set at the moment j-1 and the prediction model at the moment j. For example, the first predicted data set at the moment j may meet the following relationship:

$$\widehat{\boldsymbol{y}}_j^1 = \widetilde{\boldsymbol{y}}_{j-1} + \Delta t \widetilde{\boldsymbol{y}}_{j-1}(\boldsymbol{A}_j)^T.$$ $\widehat{\boldsymbol{y}}_j^1$ is the first predicted data set at the moment j.

Further, after the first predicted data set at the moment j is determined, the foregoing data set sending and data set reconstruction processes are performed, and then a data set processing process at the moment j+1 is performed.

In this design scheme, because the first predicted data set at the moment j can be calculated only after the prediction model at the previous moment is updated, the prediction model at the previous moment needs to be updated by using the actual sampled data set at the moment j, and the network device can obtain only a part of the actual sampled data set at the moment j, the terminal device may further send the first coefficient correction value at the moment j to the network device. Correspondingly, the network device receives the first coefficient correction value at the moment j from the terminal device, so that the network device can synchronously update the prediction model at the previous moment, and calculate the first predicted data set at the moment j.

This design scheme is applicable to a scenario in which data of a moving object changes greatly in consecutive moments or a data prediction error of the moving object is large, for example, prediction of motion trajectory point cloud of a vehicle that turns shown in FIG. 5.

In another possible design scheme, the first predicted data set at the moment j is a predicted data set output by the prediction model at the moment j-1 based on the reconstructed data set at the moment j-1. In other words, the first predicted data set at the current moment is obtained based on the prediction model at the previous moment, the prediction model at the previous moment (the moment j-1) is obtained by updating a coefficient matrix of a prediction model at a moment (a moment j-2) before the previous moment, and the prediction model at the moment before the previous moment is used to predict the first predicted data set at the previous moment (the moment j-1). The rest may be deduced by analogy.

In this design scheme, the terminal device first predicts the data set at the current moment by using the prediction model at the previous moment, and then updates the prediction model at the previous moment to obtain the prediction model at the current moment, to predict the first predicted data set at the next moment (the moment j+1).

For example, the first predicted data set at the moment j may meet the following relationship:

$$\widehat{\boldsymbol{y}}_j^1 = \widetilde{\boldsymbol{y}}_{j-1} + \Delta t \widetilde{\boldsymbol{y}}_{j-1}(\boldsymbol{A}_{j-1})^T.$$ $\widehat{\boldsymbol{y}}_j^1$ is the first predicted data set at the moment j, $\tilde{y}_{j-1}$ is the reconstructed data set at the moment j-1, $\Delta t$ is a sampling time interval, and $\boldsymbol{A}_{j-1}$ is a coefficient matrix of the prediction model at the moment j-1.

It should be understood that the reconstructed data set at the moment j-1 is determined based on the first predicted data subset in the first predicted data set at the moment j-1 and the sampled data, in the actual sampled data set at the moment j-1, other than the sampled data in the first sampled data subset, and the first predicted data set at the moment j-1 is determined by inputting a reconstructed data set at the moment j-2 into the prediction model at the moment j-2. By analogy, reference may be made to a specific implementation process of predicting and reconstructing the actual sampled data set at the moment j. Details are not described herein again.

Further, after determining the first predicted data set at the moment j based on the prediction model at the moment j-1, the terminal device may update the prediction model at the moment j-1 to obtain the prediction model at the moment j. In a possible implementation, the prediction model at the moment j is obtained by updating the prediction model at the moment j-1 based on a second coefficient correction value at the moment j, and the second coefficient correction value at the moment j is determined based on the reconstructed data set at the moment j-1, the reconstructed data set at the moment j, and the first predicted data set at the moment j. The reconstructed data set at the moment j is determined based on the first predicted data subset in the first predicted data set at the moment j. For details, refer to related descriptions in the following method embodiment. Details are not described herein.

For example, the second coefficient correction value at the moment j may meet the following relationship:

$$(\boldsymbol{C}_j^2)^T = \widetilde{\boldsymbol{y}}_{j-1}^\dagger \left( \frac{\tilde{y}_j - \widehat{y}_j^1}{\Delta t} \right).$$ $\boldsymbol{C}_j^2$ is the second coefficient correction value at the moment j, $\widetilde{\boldsymbol{y}}_{j-1}^\dagger$ is a pseudoinverse of the reconstructed data set at the moment j-1, $\tilde{y}_j$ is the reconstructed data set at the moment j, and $\Delta t$ is the sampling time interval. The terminal device may update the prediction model at the moment j-1 based on the second coefficient correction value at the moment j, to obtain the prediction model at the moment j. For example, $\boldsymbol{A}_j = \boldsymbol{A}_{j-1} + \boldsymbol{C}_j^2.$ $\boldsymbol{A}_j$ is a coefficient matrix of the prediction model at the moment j, and may be used to calculate the first predicted data set at the next moment (the moment j+1).

This design scheme is applicable to a scenario in which data of a moving object changes slightly in consecutive moments or a data prediction error of the moving object is small, for example, prediction of motion trajectory point cloud of a vehicle that travels in a straight line shown in FIG. 6.

In a possible case, for the foregoing two design schemes of data set prediction, an initial value of a prediction model, to be specific, a coefficient matrix of a prediction model at a moment j=3, may be determined based on a preconfigured reconstructed data set at a moment 1 and a preconfigured reconstructed data set at a moment 2. For example, $(A_0)^T = \widetilde{y}_1^\dagger \left( \frac{\widetilde{y}_2 - \widetilde{y}_1}{\Delta t} \right)$. $A_0$ is an initial value of the coefficient matrix of the prediction model at the moment j=3, $\widetilde{y}_1^\dagger$ is a pseudoinverse of the reconstructed data set at the moment 1, $\tilde{y}_1$ is the reconstructed data set at the moment 1, and $\tilde{y}_2$ is the reconstructed data set at the moment 2.

In embodiments of this application, whether the first predicted data set at the moment j is calculated by using the prediction model at the moment j-1 or the prediction model at the moment j may be selected by determining whether a difference between the prediction model at the moment j and the prediction model at the moment j-1 meets a first condition. If the difference between the prediction model at the moment j and the prediction model at the moment j-1 meets the first condition, the first predicted data set at the moment j is a predicted data set output by the prediction model at the moment j-1. If the difference does not meet the first condition, the first predicted data set at the moment j is a predicted data set output by the prediction model at the moment j.

That the difference between the prediction model at the moment j and the prediction model at the moment j-1 meets the first condition may include at least one of the following: A prediction error between the prediction model at the moment j and the prediction model at the moment j-1 is less than a prediction error threshold, or a matrix structure difference between the prediction model at the moment j and the prediction model at the moment j-1 is less than a structure difference threshold.

For example, that the prediction error is less than the prediction error threshold may include at least one of the following: A difference between a central point of the predicted data set output by the prediction model at the moment j and a central point of the predicted data set output by the prediction model at the moment j-1 is less than a central point difference threshold, or a norm of a difference between a convex hull of the predicted data set output by the prediction model at the moment j and a convex hull of the predicted data set output by the prediction model at the moment j-1 is less than a norm threshold.

That the matrix structure difference is less than the structure difference threshold may include at least one of the following: An absolute value of each element in a covariance matrix of a coefficient matrix of the prediction model at the moment j and a coefficient matrix of the prediction model at the moment j-1 is less than a first absolute value threshold, an absolute value of each element in a correlation coefficient matrix of the coefficient matrix of the prediction model at the moment j and the coefficient matrix of the prediction model at the moment j-1 is greater than a second absolute value threshold, or a sum of diagonal elements in a cross-correlation matrix of the coefficient matrix of the prediction model at the moment j and the coefficient matrix of the prediction model at the moment j-1 is less than a sum threshold.

In other words, the terminal device may determine, based on a change between prediction models at consecutive moments or a deviation between prediction results generated based on the prediction models at the consecutive moments, whether to use the prediction model at the previous moment or the prediction model at the current moment to predict the actual sampled data set at the current moment.

After the prediction model is determined, in this scenario, in a possible design scheme, the terminal device may send fourth information to the network device, and correspondingly, the network device receives the fourth information from the terminal device. The fourth information indicates whether the first predicted data set at the moment j is determined based on the prediction model at the moment j-1 or the prediction model at the moment j.

It should be understood that, for a prediction model used to predict an actual sampled data set at each moment, the foregoing determining may not need to be performed at each moment, but determining may be performed once after actual sampled data sets at a plurality of moments are predicted. This is not limited herein.

In another possible design scheme, whether the first predicted data set at the moment j is determined based on the prediction model at the moment j-1 or the prediction model at the moment j may be configured by the network device for the terminal device, or may be determined through negotiation between the network device and the terminal device. This is not limited herein.

In embodiments of this application, threshold information, a quantization manner, a compression manner, and the like that are used by the terminal device may be configured by the network device for the terminal device. For example, the network device sends configuration information to the terminal device, and correspondingly, the terminal device receives the configuration information from the network device. The configuration information may include at least one of the following: the quantization manner, the compression manner, a sampling step, or a correspondence between a compression rate and a first threshold. The correspondence between a compression rate and a first threshold may exist in a form of a table.

When the actual sampled data set at the moment j includes the first sampled data subset and the second sampled data subset, the correspondence between a compression rate and a first threshold may include a correspondence between a compression rate, a first threshold, and a second threshold. For example, the following Table 1 shows a correspondence between a compression rate, a first threshold, and a second threshold. Each compression rate corresponds to one first threshold and one second threshold.

Table 1

| Compression rate β | First threshold $\varepsilon_j$ | Second threshold $\delta_1$ |
|---|---|---|
| $\beta_1$ | $c_1$ | $d_1$ |
| $\beta_2$ | $c_2$ | $d_2$ |
| $\beta_3$ | $c_3$ | $d_3$ |
| $\beta_4$ | $c_4$ | $d_4$ |

Optionally, the configuration information may be carried in signaling such as RRC, MAC CE, or PHY for sending. This is not limited herein.

In a possible case, to determine whether compression is performed on the actual sampled data set at the current moment by using the data processing manner provided in embodiments of this application or an existing design scheme (for example, Draco or moving speed information-based modeling), the terminal device may alternatively perform determining based on the prediction error between the prediction model at the moment j and the prediction model at the moment j-1. It should be understood that, in this case, a threshold for performing determining based on the prediction error is set to be greater than the foregoing prediction threshold for prediction determining of a data set.

For S303:

In a scenario in which the first predicted data set at the moment j is determined based on the prediction model at the moment j-1, after reconstructing the actual sampled data set at the previous moment (the moment j-1), the network device may obtain the reconstructed data set at the moment j-1 and update the prediction model at the moment j-2, to obtain the prediction model at the moment j-1. Therefore, the network device may directly obtain the first predicted data set at the moment j based on the prediction model at the moment j-1 and the reconstructed data set at the moment j-1, that is,

$$\widehat{\boldsymbol{y}}_j^1 = \widetilde{\boldsymbol{y}}_{j-1} + \Delta t \widetilde{\boldsymbol{y}}_{j-1}(\boldsymbol{A}_{j-1})^T .$$

In a scenario in which the first predicted data set at the moment j is determined based on the prediction model at the moment j, after receiving the first coefficient correction value at the moment j, the network device updates the prediction model at the moment j-1 based on the first coefficient correction value at the moment j, to obtain the prediction model at the moment j, that is, $\boldsymbol{A}_j = \boldsymbol{A}_{j-1} + \boldsymbol{C}_j^1$ , and obtains the first predicted data set at the moment j based on the reconstructed data set at the moment j-1 and the prediction model at the moment j, that is, $\widehat{\boldsymbol{y}}_j^1 = \widetilde{\boldsymbol{y}}_{j-1} + \Delta t \widetilde{\boldsymbol{y}}_{j-1}(\boldsymbol{A}_j)^T .$

Therefore, in embodiments of this application, after obtaining the first information, the network device may obtain the location information (for example, the location index) of the predicted data in the first predicted data subset after performing processing such as decompression on the first information, and determine the first predicted data subset in the first predicted data set at the moment j based on the location index.

Refer to the example in S301. The first information includes $X_j^1=\{0,\ 2,\ 6,\ 8\}$ , and indicates that $X_j^1$ includes location indexes of predicted data in the first predicted data subset. Therefore, the network device may determine $b_1, b_3, b_7$, and $b_8$ in $\widehat{\boldsymbol{y}}_j^1$ (including the predicted data $b_1$ to $b_{10}$) based on $X_j^1=\{0,\ 2,\ 6,\ 8\}$ , that is, the first predicted data subset $\hat{S}_j^1=\{b_1,\ b_3,\ b_7,,\ b_8\}$ , to determine that $b_1, b_3, b_7$, and $b_8$ are accurate predicted data in the first predicted data set at the moment j. In this scenario, the network device further determines, based on the received third information, sampled data that cannot be represented by predicted data, for example, the fourth sampled data subset, that is, $a_2, a_5, a_6, a_8, a_9$, and $a_{10}$.

Still refer to the example in S301. The first information includes $X_j^2=\{4,\ 8\}$ and $X_j^3=\{1,3,5,9\}$ , and indicates that $X_j^2$ and $X_j^3$ are respectively location indexes of predicted data in $\hat{S}_j^2$ and location indexes of predicted data in $\hat{S}_j^3$ . Therefore, the network device may determine the first index set $X_j^1=\{0,\ 2,\ 6,\ 8\}$ based on $X_j^2=\{4,8\}$ and $X_j^3=\{1,3,5,9\}$ , to determine the first predicted data subset $\hat{S}_j^1=\{b_1,\ b_3,\ b_7,\ b_8\}$ based on $X_j^1=\{0,\ 2,\ 6,\ 8\}$ . In this scenario, the network device may further parse the received second information and third information, for example, parse out that the second information includes $D(a_2,b_5)$ and $D(a_5,b_9)$, and parse out that the third information includes $S_j^3=\{a_6,\ a_8,\ a_9,\ a_{10}\}$ . Therefore, the network device determines, based on

$X_j^2 = \{4, 8\}$, that the second predicted data subset is $\hat{S}_j^2 = \{b_5, \ b_9\}$, and may determine $a_2 = b_5 + D(a_2, b_5)$ and $a_5 = b_9$ + $D(a_5, b_9)$ based on $\hat{S}_j^2 = \{b_5, \ b_9\}$, $D(a_2, b_5)$, and $D(a_5, b_9)$, to obtain sampled data that cannot be represented by predicted data, that is, $a_2$, $a_5$, $a_6$, $a_8$, $a_9$, and $a_{10}$.

For S304:

After determining the first predicted data subset, the network device may obtain the reconstructed data set at the moment j with reference to the sampled data that cannot be represented by predicted data and that is sent through compression by the terminal device. In other words, the network device may reconstruct the actual sampled data set at the moment j based on a set of partial sampled data at the current moment that are obtained through prediction based on the prediction model and another sampled data set at the current moment that cannot be obtained through prediction and that is indicated by the terminal device by using, for example, the third information, to sense trajectory data of the first moving object at the current moment.

Refer to the example in S303. The first predicted data subset $\hat{S}_j^1 = \{b_1, \ b_3, \ b_7, \ b_8\}$, and the sampled data that cannot be represented by predicted data includes $a_2$, $a_5$, $a_6$, $a_8$, $a_9$, and $a_{10}$. Therefore, the network device may obtain the reconstructed data set at the moment j, for example, $\tilde{y}_j = \{b_3 \approx a_1, a_2, b_1 \approx a_3, b_7 \approx a_4, a_5, a_6, b_8 \approx a_7, a_8, a_9, a_{10}\}$.

Based on the data processing method shown in FIG. 3, the network device and the terminal device may obtain, through prediction by using the reconstructed data set at the previous moment, partial sampled data (for example, the first predicted data subset) in the actual sampled data set of the first moving object at the current moment, and indicate, by using the first information, a location of predicted data that matches the sampled data and that is in the first predicted data set at the moment j, without a need to send all sampled data at the current moment, so that a transmission amount of the sampled data can be reduced, to reduce air interface overheads.

The following describes effect of the data processing method provided in embodiments of this application by using an example in which a prediction model is an ODE model, the first moving object is a vehicle, and a data set is point cloud relative to the moving object, to be specific, a predicted data set is predicted point cloud, an actual sampled data set is sampled point cloud, and a reconstructed data set is reconstructed point cloud.

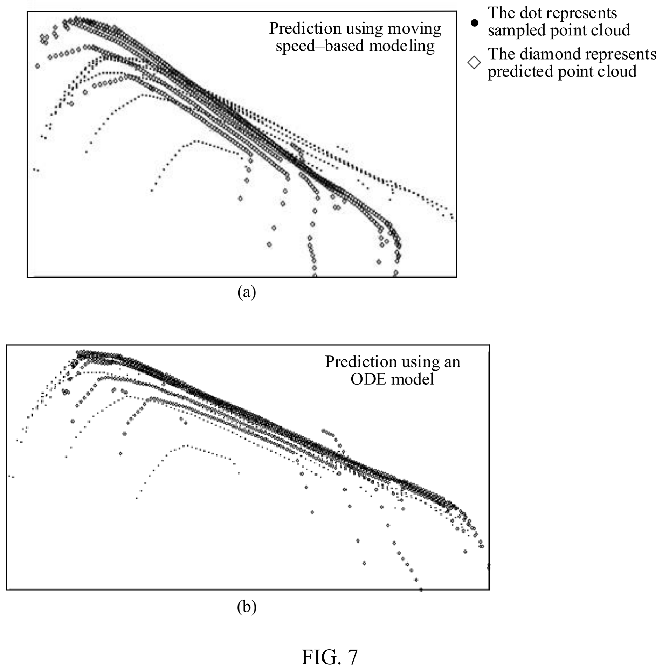

For example, FIG. 7 is a simulation comparison diagram of results of predicting sampled point cloud at the current moment by separately using moving speed-based modeling and an ODE model in a scenario with a large motion prediction error. (a) in FIG. 7 shows a comparison between predicted point cloud obtained through prediction by using moving speed information-based modeling and the sampled point cloud. It can be learned that a deviation between the predicted point cloud and the sampled point cloud is large, and only a translation case can be reflected, and rotation information cannot be considered. (b) in FIG. 7 shows a comparison between predicted point cloud obtained through prediction by using the ODE model and the sampled point cloud. Compared with prediction using moving speed information-based modeling, the predicted point cloud obtained through prediction by using the ODE model has a smaller deviation from the sampled point cloud, a higher matching degree, and may include both translational and rotational changes of the moving object. It can be learned that, compared with prediction using moving speed information-based modeling, in embodiments of this application, the sampled point cloud is predicted by using reconstructed point cloud at the previous moment and the ODE model, so that accuracy of a prediction result is higher.

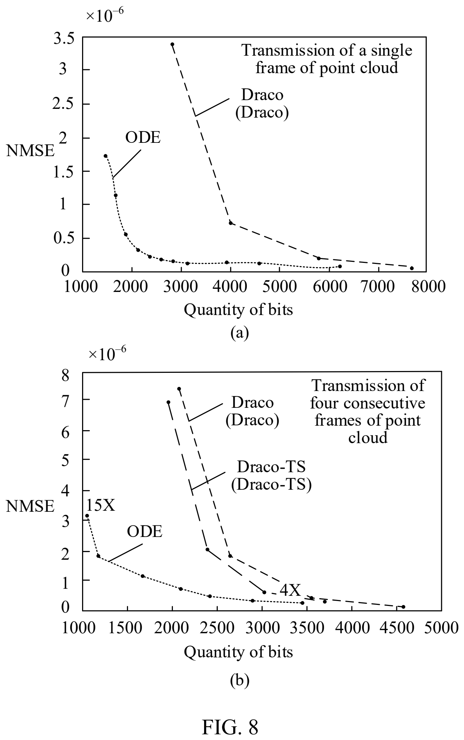

Further, in a scenario in which a motion prediction error is small, an ODE model at the previous moment is used as the ODE model, and transmission of a single frame of point cloud (a single moment) and transmission of four consecutive frames of point cloud (four consecutive moments) of a vehicle moving on a straight road section are separately used as examples to describe advantages of the solution provided in embodiments of this application compared with the existing solution. As shown in FIG. 8, (a) in FIG. 8 shows correspondences between a normalized mean squared error (normalized mean squared error, NMSE) and air interface overheads used to implement compression and transmission of a single frame of point cloud based on an ODE model and Draco. As shown in (a) in FIG. 8, compared with implementing compression and transmission of a single frame of point cloud based on Draco, air interface overheads used to implement compression and transmission of a single frame of point cloud based on the ODE model are lower, and in a case of same air interface overheads, an NMSE is also smaller.

(b) in FIG. 8 shows correspondences between an NMSE and air interface overheads used to separately implement compression and transmission of four consecutive frames of point cloud based on an ODE model, Draco, and Draco-TS. When compression and transmission of four consecutive frames of point cloud are implemented based on Draco-TS, time correlation is used, and points that overlap in consecutive frames are not transmitted. Therefore, compared with processing based on Draco, air interface overheads are low. A correspondence between a compression rate, a first threshold, and a second threshold used to implement compression and transmission of four consecutive frames of point cloud based on the ODE model is shown in the following Table 2. When a compression rate is 15.29 (15X), a set first threshold is 0.2, and a set second threshold is 0.2. In this case, air interface overheads used to implement compression and transmission of four consecutive frames of point cloud based on the ODE model is minimized, but an NMSE is maximized.

When a compression rate is 4.65 (4X), a set first threshold is 0.05, and a set second threshold is 0.05. In this case, air interface overheads used to implement compression and transmission of four consecutive frames of point cloud based on the ODE model is maximized, but an NMSE is minimized. It can be learned that, when compression and transmission of point cloud are implemented based on the ODE model, regardless of whether a used compression rate is large or small, used air interface overheads are the smallest among the three.

Table 2

| Compression rate | First threshold | Second threshold |
| --- | --- | --- |
| 15.29 | 0.2 | 0.2 |
| 9.64 | 0.15 | 0.15 |
| 7.68 | 0.1 | 0.13 |
| 6.66 | 0.078 | 0.12 |
| 5.58 | 0.05 | 0.08 |
| 4.65 | 0.05 | 0.05 |

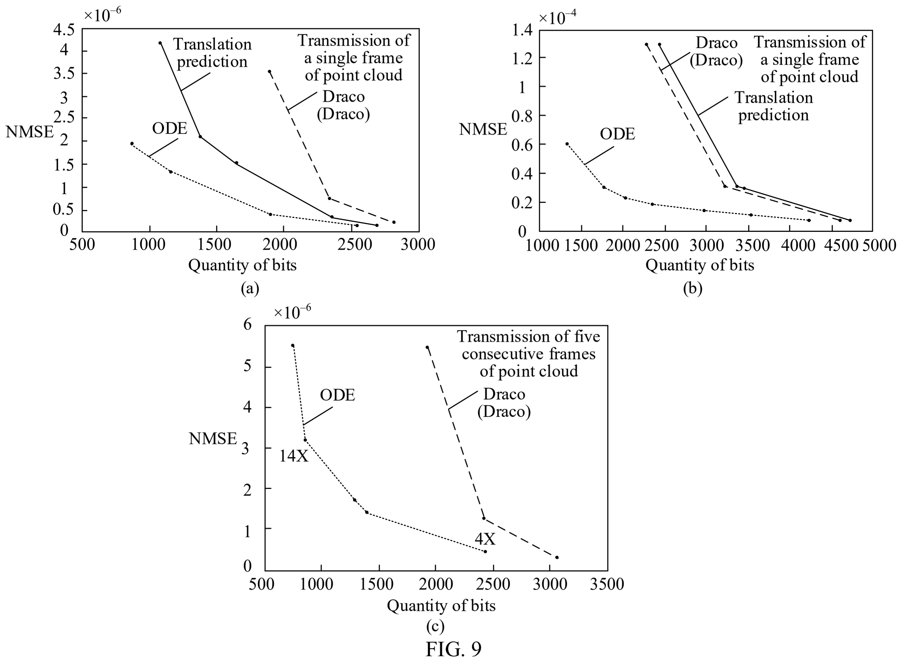

In a scenario in which a motion prediction error is large, an ODE model at the current moment is used as the ODE model, and transmission of a single frame of point cloud and transmission of four consecutive frames of point cloud are separately used as examples to describe advantages of the solution provided in embodiments of this application compared with the existing solution. As shown in FIG. 9, (a) in FIG. 9 shows correspondences between an NMSE and air interface overheads used to separately implement compression and transmission of a single frame of point cloud based on an ODE model, Draco, and a translation prediction (Velocity) method when a vehicle moves on a road section with a small curvature. It can be learned that in the three manners of implementing compression and transmission of a single frame of point cloud based on the ODE model, Draco, and the translation prediction (Velocity) method, air interface overheads for implementing compression and transmission of a single frame of point cloud based on the ODE model is the smallest.

(b) in FIG. 9 shows correspondences between an NMSE and air interface overheads used to separately implement compression and transmission of a single frame of point cloud based on an ODE model, Draco, and a translation prediction method when a vehicle moves on a road section with a large curvature. It can be learned that in the three manners of implementing compression and transmission of a single frame of point cloud based on the ODE model, Draco, and the translation prediction (Velocity) method, air interface overheads for implementing compression and transmission of a single frame of point cloud based on the ODE model is still the smallest. In addition, in this scenario, air interface overheads used to implement compression and transmission of a single frame of point cloud based on the translation prediction method are higher than those used in the scenario in which the vehicle moves on the road section with the small curvature.

(c) in FIG. 9 shows correspondences between an NMSE and air interface overheads used to implement compression and transmission of five consecutive frames of point cloud based on an ODE model and Draco when a vehicle moves on a road section with a large curvature. A correspondence between a compression rate, a first threshold, and a second threshold used to implement compression and transmission of five consecutive frames of point cloud based on the ODE model is shown in the following Table 3. When a compression rate is 14.75 (14X), a set first threshold is 0.8, and a set second threshold is 0.8. In this case, air interface overheads used to implement compression and transmission of five consecutive frames of point cloud based on the ODE model is minimized, but an NMSE is maximized. When a compression rate is 4.54 (4X), a set first threshold is 0.08, and a set second threshold is 0.15. In this case, air interface overheads used to implement compression and transmission of five consecutive frames of point cloud based on the ODE model is maximized, but an NMSE is minimized. As shown in (c) in FIG. 9, because Draco cannot use time correlation of point cloud, when a plurality of frames of point cloud are transmitted, air interface overheads generated by Draco are far greater than those generated during transmission of the plurality of frames of point cloud based on the ODE model.

Table 3

| Compression rate | First threshold | Second threshold |
| --- | --- | --- |
| 14.75 | 0.8 | 0.8 |
| 12.99 | 0.5 | 0.5 |
| 8.56 | 0.2 | 0.3 |

(continued)

| Compression rate | First threshold | Second threshold |
| --- | --- | --- |
| 4.54 | 0.08 | 0.15 |

It can be learned that, based on the data processing method provided in embodiments of this application, air interface resources can be saved, and the network device can more accurately sense a motion trajectory of a moving object.

It may be understood that, in the foregoing embodiments, the method and/or the steps implemented by the network device may alternatively be implemented by a part (for example, a processor, a chip, a chip system, a circuit, a logical module, or software) that can be used in the network device, and the method and/or the steps implemented by the terminal device may alternatively be implemented by a part (for example, a processor, a chip, a chip system, a circuit, a logical module, or software) that can be used in the terminal device.

The foregoing mainly describes the solutions provided in this application. Correspondingly, this application further provides a communication apparatus. The communication apparatus is configured to implement various methods in the foregoing method embodiments. The communication apparatus may be the network device in the foregoing method embodiment, an apparatus including the network device, or a part, for example, a chip or a chip system, that can be used in the network device. Alternatively, the communication apparatus may be the terminal device in the foregoing method embodiment, an apparatus including the terminal device, or a part, for example, a chip or a chip system, that can be used in the terminal device.

It may be understood that, to implement the foregoing functions, the communication apparatus includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

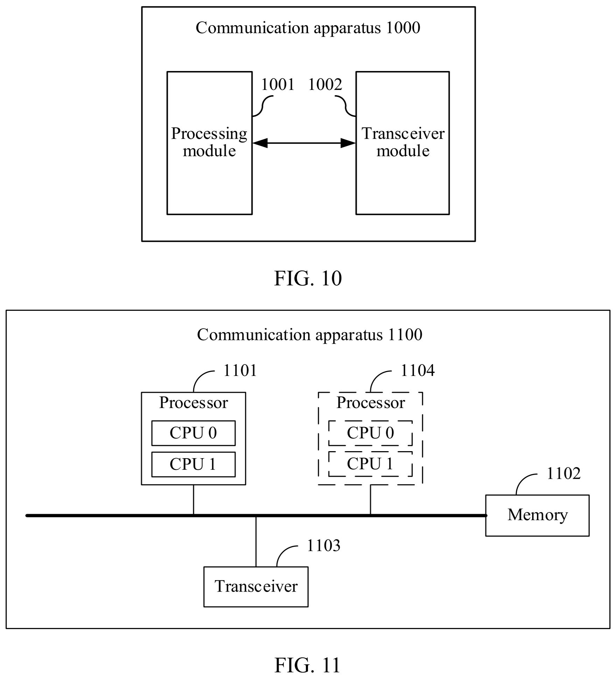

For example, the communication apparatus is the terminal device or the network device in the foregoing method embodiment. FIG. 10 is a diagram of a structure of a communication apparatus according to an embodiment of this application. As shown in FIG. 10, the communication apparatus 1000 includes a processing module 1001 and a transceiver module 1002. The processing module 1001 is configured to perform a processing function of the terminal device or the network device in the foregoing method embodiment. The transceiver module 1002 is configured to perform a transceiver function of the terminal device or the network device in the foregoing method embodiment.

All related content of the steps in the method embodiment may be cited in function descriptions of the corresponding functional modules. Details are not described herein again.

The communication apparatus 1000 provided in this embodiment may perform the foregoing method. Therefore, for technical effect that can be achieved by the communication apparatus, refer to the foregoing method embodiment. Details are not described herein again.

In a possible design scheme, in this embodiment of this application, the transceiver module 1002 may include a receiving module and a sending module (not shown in FIG. 10). The transceiver module is configured to implement a sending function and a receiving function of the communication apparatus 1000.

In a possible design scheme, the communication apparatus 1000 may further include a storage module (not shown in FIG. 10), and the storage module stores a program or instructions. When the processing module 1001 executes the program or the instructions, the communication apparatus 1000 is enabled to perform a function of the terminal device or the network device in the method shown in FIG. 3.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

For example, FIG. 11 is a diagram of a structure of another communication apparatus according to an embodiment of this application. The communication apparatus may be a terminal device or a network device, or may be a chip (system) or another part or component that may be disposed in the terminal device or the network device. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected to the memory 1102 and the transceiver 1103 through a communication bus.

The following describes in detail each part of the communication apparatus 1100 with reference to FIG. 11.

The processor 1101 is a control center of the communication apparatus 1100, and may be one processor or may be a collective term of a plurality of processing elements. For example, the processor 1101 is one or more central processing units (central processing units, CPUs), may be an application-specific integrated circuit (application-specific integrated circuit, ASIC), or may be configured as one or more integrated circuits for implementing embodiments of this application, for example, one or more microprocessors (digital signal processors, DSPs) or one or more field programmable gate arrays (field programmable gate arrays, FPGAs).

Optionally, the processor 1101 may perform various functions of the communication apparatus 1100 by running or executing a software program stored in the memory 1102 and invoking data stored in the memory 1102.

During specific implementation, in an embodiment, the processor 1101 may include one or more CPUs, for example, a CPU 0 and a CPU 1 in FIG. 11.

During specific implementation, in an embodiment, the communication apparatus 1100 may also include a plurality of processors, for example, the processor 1101 and a processor 1104 shown in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

The memory 1102 is configured to store a software program for executing the solutions of this application, and the processor 1101 controls execution. For a specific implementation, refer to the foregoing method embodiment. Details are not described herein again.

Optionally, the memory 1102 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 1102 is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal device, and the transceiver 1103 may be configured to communicate with a network device or communicate with another terminal device. For another example, the communication apparatus 1100 is a network device, and the transceiver 1103 may be configured to communicate with a terminal device or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through the interface circuit (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer parts than those shown in the figure, or combine some parts, or have different part arrangements.

In addition, for technical effect of the communication apparatus 1100, refer to the technical effect of the method in the foregoing method embodiment. Details are not described herein again.

An embodiment of this application further provides a computer-readable storage medium. The computer-readable storage medium stores a computer program or instructions. When the computer program or the instructions are executed by a computer, functions of the foregoing method embodiment are implemented.

An embodiment of this application further provides a computer program product. When the computer program product is executed by a computer, functions of the foregoing method embodiment are implemented.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

## Claims

1. A data processing method, wherein the method comprises:

   determining first information, wherein the first information comprises location information of predicted data in a first predicted data subset of a first predicted data set of a first moving object at a moment j, the first predicted data subset comprises predicted data that matches each piece of sampled data in a first sampled data subset of an actual sampled data set of the first moving object at the moment j, the location information is used to determine a reconstructed data set of the first moving object at the moment j, the reconstructed data set of the first moving object at the moment j is used to determine a first predicted data set of the first moving object at a moment j+1, and j is a positive integer greater than 2; and
   sending the first information.

2. The method according to claim 1, wherein that the first predicted data subset comprises the predicted data that matches each piece of sampled data in the first sampled data subset comprises that the first predicted data subset comprises predicted data whose distance from each piece of sampled data in the first sampled data subset is less than a first threshold.

3. The method according to claim 1 or 2, wherein the method further comprises:
   sending second information, wherein the second information comprises compressed data of a difference of each piece of sampled data in a second sampled data subset of the actual sampled data set, and the difference is a distance between the sampled data in the second sampled data subset and corresponding predicted data in a second predicted data subset, the second predicted data subset comprises predicted data that is in the first predicted data set of the first moving object at the moment j and whose distance from each piece of sampled data in the second sampled data subset is greater than or equal to the first threshold and less than a second threshold.

4. The method according to any one of claims 1 to 3, wherein the location information comprises a location index of at least one of the following predicted data: the predicted data in the first predicted data subset, or predicted data, in the first predicted data set of the first moving object at the moment j, other than the predicted data in the first predicted data subset.

5. The method according to claim 3, wherein the location information comprises location indexes of at least two of the following predicted data: the predicted data in the first predicted data subset, the predicted data in the second predicted data subset, or predicted data, in the first predicted data set of the first moving object at the moment j, other than the predicted data in the first predicted data subset and the predicted data in the second predicted data subset.

6. The method according to any one of claims 1 to 5, wherein the method further comprises:
sending third information, wherein the third information comprises compressed data of each piece of sampled data in a third sampled data subset, and the third sampled data subset comprises sampled data, in the actual sampled data set, other than the sampled data in the first sampled data subset and the sampled data in the second sampled data subset, or the third sampled data subset comprises sampled data, in the actual sampled data set, other than the sampled data in the first sampled data subset.

7. The method according to any one of claims 1 to 6, wherein the method further comprises:
sending fourth information, wherein the fourth information indicates that the first predicted data set of the first moving object at the moment j is determined based on a prediction model at a moment j-1 or is determined based on a prediction model at the moment j, and the prediction model at the moment j is obtained by updating the prediction model at the moment j-1.

8. The method according to claim 7, wherein when the first predicted data set of the first moving object at the moment j is determined based on the prediction model at the moment j, the method further comprises:
sending a first coefficient correction value at the moment j, wherein the first coefficient correction value at the moment j is used to determine the prediction model at the moment j, the first coefficient correction value at the moment j is determined based on a reconstructed data set of the first moving object at the moment j-1, the actual sampled data set, and a second predicted data set of the first moving object at the moment j, and the second predicted data set is determined based on the reconstructed data set of the first moving object at the moment j-1 and the prediction model at the moment j-1.

9. The method according to any one of claims 1 to 8, wherein before determining the first information, the method further comprises:
receiving configuration information, wherein the configuration information comprises at least one of the following: a quantization manner, a compression manner, a sampling step, or a correspondence between a compression rate and a first threshold.

10. A data processing method, wherein the method comprises:

receiving first information, wherein the first information comprises location information of predicted data in a first predicted data subset of a first predicted data set of a first moving object at a moment j, the first predicted data subset comprises predicted data that matches each piece of sampled data in a first sampled data subset of an actual sampled data set of the first moving object at the moment j, and j is a positive integer greater than 2; determining the first predicted data subset based on the location information and the first predicted data set of the first moving object at the moment j; and determining a reconstructed data set of the first moving object at the moment j based on the first predicted data subset, wherein the reconstructed data set of the first moving object at the moment j is used to determine a first predicted data set of the first moving object at a moment j+1.

11. The method according to claim 10, wherein that the first predicted data subset comprises the predicted data that matches each piece of sampled data in the first sampled data subset comprises that the first predicted data subset comprises predicted data whose distance from each piece of sampled data in the first sampled data subset is less than a first threshold.

12. The method according to claim 10 or 11, wherein the method further comprises:
receiving second information, wherein the second information comprises compressed data of a difference of each piece of sampled data in a second sampled data subset of the actual sampled data set, and the difference is a distance between the sampled data in the second sampled data subset and corresponding predicted data in a second predicted data subset, the second predicted data subset comprises predicted data that is in the first predicted data set of the first moving object at the moment j and whose distance from each piece of sampled data in the second sampled data subset is greater than or equal to the first threshold and less than a second threshold.

13. The method according to any one of claims 10 to 12, wherein the location information comprises a location index of at least one of the following predicted data: the predicted data in the first predicted data subset, or predicted data, in the first predicted data set of the first moving object at the moment j, other than the predicted data in the first predicted data subset.

14. The method according to claim 12, wherein the location information comprises location indexes of at least two of the following predicted data: the predicted data in the first predicted data subset, the predicted data in the second predicted data subset, or predicted data, in the first predicted data set of the first moving object at the moment j, other than the predicted data in the first predicted data subset and the predicted data in the second predicted data subset.

15. The method according to any one of claims 10 to 14, wherein the method further comprises:
receiving third information, wherein the third information comprises compressed data of each piece of sampled data in a third sampled data subset, and the third sampled data subset comprises sampled data, in the actual sampled data set, other than the sampled data in the first sampled data subset and the sampled data in the second sampled data subset, or the third sampled data subset comprises sampled data, in the actual sampled data set, other than the sampled data in the first sampled data subset.

16. The method according to any one of claims 10 to 15, wherein the method further comprises:
receiving fourth information, wherein the fourth information indicates that the first predicted data set of the first moving object at the moment j is determined based on a prediction model at a moment j-1 or is determined based on a prediction model at the moment j, and the prediction model at the moment j is obtained by updating the prediction model at the moment j-1.

17. The method according to claim 16, wherein when the first predicted data set of the first moving object at the moment j is determined based on the prediction model at the moment j, the method further comprises:
receiving a first coefficient correction value at the moment j, wherein the first coefficient correction value at the moment j is used to determine the prediction model at the moment j, the first coefficient correction value at the moment j is determined based on a reconstructed data set of the first moving object at the moment j-1, the actual sampled data set, and a second predicted data set of the first moving object at the moment j, and the second predicted data set of the first moving object at the moment j is determined based on the reconstructed data set of the first moving object at the moment j-1 and the prediction model at the moment j-1.

18. The method according to any one of claims 10 to 17, wherein the method further comprises:
sending configuration information, wherein the configuration information comprises at least one of the following: a quantization manner, a compression manner, a sampling step, or a correspondence between a compression rate and a first threshold.

19. A communication apparatus, wherein the communication apparatus comprises a processing module and a transceiver module;

the processing module is configured to perform a processing function in the method according to any one of claims 1 to 18; and
the transceiver module is configured to perform a transceiver function in the method according to any one of claims 1 to 18.

20. A communication apparatus, comprising a processor, wherein the processor is coupled to a memory; and
the processor is configured to execute a computer program stored in the memory, so that the method according to any one of claims 1 to 18 is performed.

21. A computer-readable storage medium, wherein the computer-readable storage medium stores a computer program or instructions, and when the computer program or the instructions are run on a computer, the method according to any one of claims 1 to 18 is performed.

22. A computer program product, wherein the computer program product comprises a computer program or instructions, and when the computer program or the instructions are run on a computer, the method according to any one of claims 1 to 18 is performed.

(a)                                              (b)

FIG. 1

Network device                              Terminal device

FIG. 2

FIG. 3

FIG. 4

FIG. 5

FIG. 6

Prediction using moving speed–based modeling

● The dot represents sampled point cloud

◇ The diamond represents predicted point cloud

(a)

Prediction using an ODE model

(b)

FIG. 7

FIG. 8

(a)

(b)

(c)

FIG. 9

Communication apparatus 1000

1001　1002

Processing module ⟷ Transceiver module

FIG. 10

Communication apparatus 1100

1101

Processor

CPU 0

CPU 1

1104

Processor

CPU 0

CPU 1

1102

Memory

1103

Transceiver

FIG. 11

## INTERNATIONAL SEARCH REPORT

| International application No. |
| --- |
| **PCT/CN2023/111453** |

### A. CLASSIFICATION OF SUBJECT MATTER

H04W28/02(2009.01)i

According to International Patent Classification (IPC) or to both national classification and IPC

### B. FIELDS SEARCHED

Minimum documentation searched (classification system followed by classification symbols)

IPC:H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, 3GPP: 预测, 数据, 重构, 位置, 采样, 压缩, 空口, 传输, 开销, 点云, prediction, data, reconstruction, location, sampling, compression, air interface, transmission, overhead, point, cloud

### C. DOCUMENTS CONSIDERED TO BE RELEVANT

| Category* | Citation of document, with indication, where appropriate, of the relevant passages | Relevant to claim No. |
| --- | --- | --- |
| A | WO 2023283782 A1 (BEIJING XIAOMI MOBILE SOFTWARE CO., LTD.) 19 January 2023 (2023-01-19) description, page 6 paragraph 2-page 8 paragraph 1 | 1-22 |
| A | CN 110505678 A (HUAWEI TECHNOLOGIES CO., LTD.) 26 November 2019 (2019-11-26) entire document | 1-22 |
| A | CN 115269108 A (HUAWEI CLOUD COMPUTING TECHNOLOGY CO., LTD.) 01 November 2022 (2022-11-01) entire document | 1-22 |
| A | CN 116488697 A (HUAWEI TECHNOLOGIES CO., LTD.) 25 July 2023 (2023-07-25) entire document | 1-22 |
| A | ZTE. "(TP for NR BL CR for TS 38.423) Corrections of Data Forwarding Info Related to S-NODE RELEASE REQUEST (CONFIRM) etc" *3GPP TSG RAN WG3#102, R3-186319*, 16 November 2018 (2018-11-16), sections 8-9 | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 March 2024** | **11 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/111453**

| Patent document cited in search report | | | Publication date (day/month/year) | Patent family member(s) | | | Publication date (day/month/year) |
|---|---|---|---|---|---|---|---|
| WO | 2023283782 | A1 | 19 January 2023 | CN | 115956371 | A | 11 April 2023 |
| CN | 110505678 | A | 26 November 2019 | WO | 2021004512 | A1 | 14 January 2021 |
| CN | 115269108 | A | 01 November 2022 | None | | | |
| CN | 116488697 | A | 25 July 2023 | None | | | |

Form PCT/ISA/210 (patent family annex) (July 2022)